(19) Europäisches Patentamt
European Patent Office
Office européen des brevets

(11) **EP 2 051 861 B1**

(12) **EUROPEAN PATENT SPECIFICATION**

(45) Date of publication and mention
of the grant of the patent:
**23.03.2011 Bulletin 2011/12**

(51) Int Cl.:
**B01D 67/00** (2006.01)   **B01D 71/40** (2006.01)
**B01D 69/12** (2006.01)

(21) Application number: **07808523.0**

(22) Date of filing: **03.08.2007**

(86) International application number:
**PCT/NL2007/050390**

(87) International publication number:
**WO 2008/016303 (07.02.2008 Gazette 2008/06)**

(54) **POROUS MEMBRANE AND ITS METHOD OF MANUFACTURE**

PORÖSE MEMBRAN UND VERFAHREN ZUR HERSTELLUNG

MEMBRANE POREUSE ET PROCÉDÉ POUR SA FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.08.2006 EP 06076534**

(43) Date of publication of application:
**29.04.2009 Bulletin 2009/18**

(73) Proprietor: **FUJIFILM Manufacturing Europe B.V.**
**5047 TK Tilburg (NL)**

(72) Inventors:
• **ITAMI, Yujiro**
**NL-5045 WG Tilburg (NL)**
• **KASE, Akira**
**NL-5045 MD Tilburg (NL)**

(74) Representative: **Mayall, John et al**
**Fujifilm Imaging Colorants Limited**
**Intellectual Property Group**
**P.O. Box 42**
**Hexagon Tower**
**Blackley, Manchester**
**M9 8ZS (GB)**

(56) References cited:
**WO-A1-2007/018421    WO-A1-2007/018422**
**WO-A1-2007/018423    WO-A1-2007/018424**
**WO-A1-2007/018426    WO-A1-2007/018428**
**FR-A- 2 843 045    JP-A- 53 007 783**
**US-A- 5 021 160    US-A1- 2003 211 299**

## Description

### Field of the invention

The present invention relates to porous membranes obtained by curing compounds through radiation. The invention also relates to processes for preparing said membranes

### Background of the invention

Several examples can be found in which curable mixtures are used to produce inkjet recording media. EP-A-1 289 767, EP-A-1 418 058 and EP-A-1 477 318 disclose layers, cured by UV or other radiation in which the porous character is provided by organic or inorganic particles in order to obtain sufficient solvent uptake. However, application of inorganic particles can cause physical weakness of the layer, resulting in cracking or breaking of the layer.

EP-A-0 738 608 describes curing compositions containing a water soluble high-molecular weight compound, but these compositions yield solid layers and therefore do not dry quickly.

WO-A-99/21723 discloses a substrate coated with a binder dissolved in an aqueous solvent mixture, which layer is then cured, and teaches that any amount of solvent is suitable, and there is no limit to the degree in which the binder is diluted before curing.

WO-A-01/91999 and GB-A-2 182 046 disclose a curable inkjet coating that is cured after drying the coating.

US-A-6 210 808 describes an inkjet recording sheet wherein a colloidal suspension of water-insoluble particles and water-insoluble monomers/prepolymers is cured.

US-A-6 734 514 discloses a radiation curable coating for ink jet printing comprising water insoluble latexes.

Another method to obtain porosity is the application of foamed layers as in for example EP-A-0 888 903.

In the above mentioned prior art the receiving layer is not isolated but formed directly on the substrate after drying and/or further manipulation of the coated substrate. It would be advantageous, to be able to isolate such a layer as a membrane which can be used as such or which can be applied to a substrate in a separate process to give advantageous properties, for instance as an inkjet receiving medium. Membranes are produced by various methods such as dry and wet phase inversion of polymeric solutions, stretching of homogeneous, partially crystalline polymer films, sintering of particulate materials, thermal gelation of homogeneous polymer solutions and by radical polymerization with simultaneous phase separation by irradiation or thermal initiation. Of these methods the wet phase inversion method - in which a polymer solution is contacted with a precipitating agent or non-solvent causing separation into a solid polymer-rich phase and a liquid solvent-rich phase - is by far the most widely used technique for obtaining porous structures. Examples in which this technique is applied can be found in WO-A-98/32541, WO-A-2005/016655, US-A-4 707 265, US-A-5 079 272, EP-A-0 803 533, EP-A-0 812 697, EP-A-0 824 959, EP-A-0 889 080 and EP-A-1 149 624. The main disadvantages of wet phase inversion are the limited production speed obtainable and the high amounts of organic solvents required. Dry phase inversion processes are described e.g. in EP-A-1 176 030. An alternative method is disclosed in US-A-4 466 931, EP-A-0 216 622 and EP-A-0 481 517 describing a membrane which is produced by irradiating curable monomers in non-volatile organic solvents which are to be removed by washing with a washing liquid of low boiling point. As many curable compounds are hydrophobic in nature both dry and wet phase inversion techniques require organic apolar solvents to obtain a clear solution.

Membranes can also be made by other methods such as thermal polymerization as described in e.g. EP-A-0 251 511, JP-A-5177120 and US-A-4942204 or grafting acrylic acid to PVC films as described in GB-A-1 549 352 but these membranes or films are not porous and are not formed by phase separation from a solvent.

Membranes made from amphiphilic copolymers as free standing films are described in WO-A-01/88025 which are also not porous and of relatively small size (up to 1 mm$^2$).

Chain transfer agents are commonly applied to control the molecular weight distribution of polymers formed in radical polymerization reactions such as described in e.g. US-B-6 911 510 and EP-A-1 524 279.

US-A-2003/211299 describes a cured adhesion enhancing surface obtained from a curable precursor that may comprise mercapto compounds as photoinitiator. These surfaces are non porous and are not suited as membranes.

US-A-4 010 289 describes a printable film comprising fillers made by photopolymerizing polyepoxides in organic solvents.

EP-A-0 485 240 describes a printed substrate obtained by curing a composition comprising at least 60wt% pigments and less than 5% water. The cured layer is essentially non-porous and not suited as membrane.

FR-A-2 843 045 describe a composite polyamide membrane comprising a microporous support and a hydrophilic coating to improve the resistance to fouling, the hydrophilic coating being made by curing a polyfunctional epoxy compound involving the opening of the epoxy groups.

JP-A-53007783 describes the manufacture of porous membranes by irradiating an aqueous solution or dispersion of hydrophilic photo-setting resin with actinic rays. US-A-5 021 160 relates to photoinitiator-free cation exchange membranes.

Although under certain conditions acceptable results can be obtained with the above-mentioned prior materials, there is still a need for improvement. The present invention seeks to fulfill, at least in part, this need.

For recording media improvement is required in particular with respect to smearing properties, which may be associated with absorption properties of the porous film, in particular absorption speed. At the same time a porous film must be provided that has a good gloss. This invention aims at solving these problems, at least in part.

Detailed description

It is an object of this invention to provide a porous membrane that can be produced at low cost and at high coating speeds. It is a further object of this invention to provide a recording medium having excellent drying characteristics and also high image print densities. We unexpectedly found that these objectives can be met by providing a porous membrane based on one or more chain transfer agents and at least one type of curable compound and photoinitiator, which curable compound is soluble in an aqueous solvent. The membrane of the invention can be provided on a support thereby yielding a recording medium. "Based on" as used herein, means that the final composition is composed of the (monomeric) starting compounds, thus the product of the invention comprises the (polymeric) reaction products of the chain transfer agent and the at least one type of curable compound. These reaction products thus include ologimers, polymers, copolymers, and the like.

The membrane of the invention is obtainable by polymerizing a curable composition comprising at least one type of curable compound and photoinitiator, water and at least one type of chain transfer agent having a chain transfer constant of more than 0.1 with styrene, methyl methacrylate, methyl acrylate, ethyl acrylate, butyl acrylate or acrylonitrile.

Chain transfer is a reaction in radical polymerization by which a radical center on a growing polymer chain is transferred to another molecule, in this case to a chain transfer agent. Chain transfer agents can be characterized by a so-called chain transfer constant which is defined as the ratio of the chain transfer rate constant and the propagation rate constant. Thus the chain transfer constant is defined as $Cx = k_{tr,x} / k_p$, where $k_{tr,x}$ and $k_p$ are rate constants of the following reactions.

$$P_n^{\bullet} + XY \xrightarrow{k_{tr,x}} P_nY + X^{\bullet}$$

$$P_n^{\bullet} + M \xrightarrow{k_p} P_{n+1}^{\bullet}$$

Where $P_n^{\blacksquare}$ and $P_{n+1}^{\blacksquare}$ are propagating polymer radicals, XY is a chain transfer agent (X, Y can be any atom or organic group) and M is a monomer.

In accordance with the present invention, chain transfer agents are used having a chain transfer constant for the reaction with a reference compound of at least 0.1, preferably more than 1.0. These reference compounds are selected from the group consisting of styrene, methyl methacrylate, methyl acrylate, ethyl acrylate, butyl acrylate and acrylonitrile. In accordance with the present invention the chain transfer constant of the chain transfer agent is at least 0.1 for at least one of the reference compounds. Preferably it is at least 0.1 for more than one of the reference compounds, and more preferably it is at least 0.1 for all of the reference compounds.

For transfer constants lower than 0.1 no or only very limited effects are achieved. The value of the chain transfer constant depends not only on the type of the transfer agent but also on factors as monomer type and concentration, temperature and solvent properties. Although a general applicable value is difficult to specify one can say that the more reactive agents are preferred. Optimum quantities depend very much on the composition of the curable composition, on the type of the chain transfer agent (reactivity) and on the irradiation dose so the optimum concentration has to be determined case by case. At high levels of chain transfer agents, it was found that adhesion problems may occur if the compound is in the layer adjacent to the support. When a multilayer membrane is made the chain transfer agent is preferably in the toplayer where the effect on image density is expected to be the highest. Very high levels may retard the crosslinking reaction too much resulting in a dense non-porous layer or even a layer that is still uncured. Preferably the chain transfer agent is present in an amount between 0.001 and 1.0 mmol/g curable compound (or curable compounds in case more than one curable compound is used). For most compounds the preferred range will be between 0.005 and 0.1 mmol/g curable compound(s). If the membrane consists of more than one layer the mentioned range apply to the layer or layers comprising the chain transfer agent.

Chain transfer agents or classes of chain transfer agents according the invention are described for example in J. Brandrup, E. H. Immergut and E.A. Grulke, "Polymer Handbook" Fourth edition, 1999 (ISBN 0-471-48171-8), page II-97 - II-168; P. Flory, "Principles of Polymer Chemistry", Cornell University Press (ISBN 0-8014-0134-8); and George Odian, "Principles of Polymerization", Fourth edition (2004), John Wiley & Sons (ISBN 0-471-27400-3).

Classes of compounds that comprise suitable chain transfer agents are mercaptans (thiols), polymethacrylates, polyhalo alkanes, benzoquinones, oximes, anthracenes, disulfides, sulfonyl chlorides, sulfoxides, phosphines, alkyl anilines, alkyl amines and metal compounds (such as salts or complexes containing aluminum, iron, cobalt or copper atoms). Preferred compounds are mercaptoethanol, mercaptoethylether, mercaptobenzimidazole, ethyldithioacetate, mercaptoacetic acid, mercaptopropionic acid, alkyl mercaptopropionate, aminomercaptopropionate, mercapto-propylsulfonate, ethyldithiocarbonato-S-sulfopropylester, dimercaptopropane sulfonate, mercaptobenzimidazole sulfonate, mercapto-propanediol, dimercaptopropanol, mercaptobutanol, butanethiol, mercaptoethylamine, chloroethanethiol, dimethyldisulfide, tetrabromomethane, dimethylaniline, mercaptoethylether, ethylenedioxydiethanethiol, polyethyleneglycol dimercaptoacetate and triethylamine. Most preferred are compounds comprising mercapto-groups such as aliphatic and aromatic thiols.

A special class of chain transfer agents are so-called RAFT agents (RAFT = Reversible Addition-Fragmentation chain Transfer). These can also be suitably employed in the present invention. This RAFT reaction is a controlled radical polymerization and generally leads to very narrow molecular weight distributions. Suitable RAFT agents comprise a dithioester group of the formula R1-C(=S)-S-R2, a xanthate group of the formula R1-O-C(=S)-S-R2 or a thioxanthate (trithiocarbonate) group of the formula R1-S-C(=S)-S-R2, a dithiocarbamate group of the formula R1-NR-C(=S)-S-R2 where R, R1 and R2 are selected from an alkyl group, a cycloalkyl group, an aryl group, a heterocyclic group or an arenyl group.

Examples of RAFT agents are ethyldithioacetate, benzyl dithiobenzoate, cumyl dithiobenzoate, benzyl 1-pyrrolecarbodithioate, cumyl 1-pyrrolecarbodithioate, o-ethyldithiocarbonato-S-(3-sulfopropyl) ester, N,N-dimethyl-s-thiobenzoylthiopropionamide, N,N-dimethyl-s-thiobenzoylthioacetamide, trithiocarbonates and dithiocarbamates.

By this invention a porous membrane can be prepared that can accommodate the high amounts of solvent associated with printing high density areas as in for example inkjet recording media while maintaining the benefits, as of for example high gloss and high image density, of a swellable layer. This may be obtained by careful selection of the concentration and composition of a curable compound mixture, coating said mixture on a substrate, curing that curable compound mixture causing phase separation between the crosslinked compounds and the solvent after which a substrate provided with a porous layer is formed and subjecting the resulting composition to a drying step. After evaporation of the solvent a porous structure remains that has swelling properties as well. A mixture in this context is defined as any kind of possible state of a compound in a solution. So mixtures comprise solutions, suspensions (including emulsions), dispersions and so on. Throughout the present text the terms curable compound and (curable) monomer are used interchangeably.

All ratios and percentages as used herein are based on weight of the total composition, unless indicated otherwise.

When coating such a mixture comprising a curable compound on a substrate, followed by the subsequent steps of curing the mixture, drying the resulting porous layer and optionally separating the porous layer from the substrate, a porous membrane can be obtained which can be used in various applications (*e.g.* liquid separation membrane of gas separation membrane) and which is characterised by its high water flux and/or uptake capability. If separated, the porous membrane of the present invention can be fixed afterwards to all kinds of supports resulting in media with a high gloss and an excellent water uptake capability. Separation from the substrate can be easily achieved by proper treatment of the substrate *e.g.* by applying a 'release' layer comprising for instance a siloxane based polymer before coating the curable compound mixture on the substrate. The isolated porous membrane of this invention can be separately attached to a substrate via an adhesive layer. This adhesive layer can also impart certain properties to the resulting medium.

In another embodiment substrate and porous layer are not separated, but are used as formed *e.g.* a membrane coated on a porous support like nonwoven or on a glossy support in which the porous membrane can function as a colorant receiving layer when used in recording media. This can be for example an inkjet recording medium in which case the colorant is an ink-solution. In case the substrate is porous (*e.g.* nonwoven), the porous layer according the invention can function as a separation layer when used as a fluid separation membrane. In these embodiments the porous layer is generally in direct contact with the support.

In another embodiment a substrate is coated with two or more layers of the curable compound mixture. By this method porous membranes can be designed and prepared with varying properties throughout the porous membrane. So an outer layer can be designed and prepared having colorant fixing properties, *e.g.* by introducing mordants in the outer layer, and an inner porous layer can be constructed having an optimised water uptake capability. Alternatively to introduce the so-called backview option in backlit material the outer layer is optimized for scratch resistance and the colorant fixing property is located in the layer closest to a transparent support. Or for separation membrane applications the porosity of the outer layer is controlled to determine the separation characteristics while the inner layer(s) are optimized to give both strength to the membrane and allow high solvent fluxes.

In general the dry thickness of the membrane of this invention in isolated form may typically be between 10 $\mu$m and 500 $\mu$m, more preferably between 30 and 300 $\mu$m. When adhered to a substrate the membrane need not give internal strength and the optimal thickness is based on properties such as solvent uptake capacity. In the latter case the dry thickness is typically between 5 and 50 $\mu$m. When the substrate is impermeable to aqueous solvents the dry thickness is preferably between 20 and 50 $\mu$m, while when the substrate is able to absorb part of the solvent as is the case for *e.g.* (coated) base paper the preferred dry thickness is between 5 and 30 $\mu$m. When the porous layer is a multilayer the thickness of the various layers can be selected freely depending on the properties one likes to achieve.

Curable compounds according the invention are described for example in "Development of Ultraviolet and Electron Beam Curable Materials" (edited by Y. Tabata, CMC publishing, 2003, ISBN 4882317915) and may be selected from, but are not limited to epoxy compounds, oxetane derivatives, lactone derivatives, oxazoline derivatives, cyclic siloxanes, or ethenically unsaturated compound such as acrylates, methacrylates, polyene-polythiols, vinylethers, vinyl-lamides, vinylamines, allyl ethers, allylesters, allylamines, maleic acid derivaties, itacoic acid derivaties, polybutadienes and styrenes. Preferably as the main component (meth)acrylates are used, such as alkyl-(meth)acrylates, polyester-(meth)acrylates, urethane-(meth)acrylates, polyether-(meth)acrylates, epoxy-(meth)acrylates, polybutadiene-(meth) acrylates, silicone-(meth)acrylates, melamine-(meth)acrylates, phosphazene-(meth)acrylates, (meth)acrylamides and combinations thereof because of their high reactivity. Epoxy(meth)acrylate compounds are compounds comprising one or more epoxy(meth)acrylate groups. Epoxy(meth)acrylate groups are formed by reacting epoxygroups with (meth) acrylic acid whereby the epoxy group is converted into a 2-(meth)acryoyloxy-1-hydroxy-ethyl group.

Other types of curable compounds may be combined with the main component in order to modify certain characteristics of the resulting membrane. These compounds can be used in the form of a mixture of the monomers *per se,* a mixture of oligomers comprising the monomers or a mixture of polymers comprising the monomers (*e.g.* monomer solution, monomer suspension, monomer dispersion, oligomer solution, oligomer suspension, oligomer dispersion, polymer solution, polymer suspension and polymer dispersion).

In order to achieve the porous membrane of the invention, the curable composition and the processing conditions have to be selected with care. Upon irradiation the monomers (or oligomers or prepolymers) crosslink to gradually form polymers. During this process the solubility of the growing polymer in the solvent decreases resulting in phase separation and by result the polymer separates from the solution. Finally the polymer forms a network with a porous structure wherein the solvent fills the pores. Upon drying the solvent is removed and a porous membrane remains. To obtain an optimal structure of the porous membrane it is important to carefully select the concentration of the curable compound or mixture of curable compounds. When the concentration is too low it is assumed that upon curing no network structure is formed and when the concentration is too high experiments indicate that a more or less homogenous gelled layer may be formed that yields a non-porous, transparent layer after drying. For certain embodiments such as separation of gasses very small pores are preferred while for other embodiments such as recording media a more porous structure is important for a quick solvent uptake. In view of this, the concentration of the curable compound or compounds in the solvent is preferably between 10 and 80 wt.%, more preferably between 20 and 70 wt.%, most preferably between 30 and 60 wt.%. In other words, the curable composition comprises (aqueous) solvent, preferably at least 10wt%, more preferably at least 20wt% of (aqueous) solvent. Even more preferably the curable composition comprises at least 30 or 40 wt% of solvent.

Many curable compounds are hydrophobic in nature and require organic apolar solvents to obtain a clear solution. Volatile organic solvents are not preferred since these may result in hazardous conditions in the production area during the drying phase of the membrane while non-volatile solvents are difficult to remove and are thus not preferred either. For safety reasons, and also for considerations of health and environment, as well as from economic viewpoint, water is the most preferred solvent. Suitable curable compounds are preferably water reducible to form an aqueous solution but can also be dispersible in water or an aqueous solution, or can be present as a suspension. A compound is regarded as "water reducible" when at 25 °C at least 2 wt% of water is compatible with (*viz.* forms a mixture with) the curable compound. Preferably at least 10 wt% of water is miscible with 90 wt% of the curable compounds of the invention. A solvent comprising water is generally referred to as an aqueous solvent. The aqueous solvent in the invention preferably comprises at least 30 wt.% of water, more preferably at least 50 wt.% of water, and may further comprise other polar or apolar co-solvents. In case the miscibility with water is not sufficient to dissolve the curable compound completely, admixing of a co-solvent is desirable. In a preferred embodiment the solvent contains at least 60 wt.%, preferably at least 70 wt.% and more preferably at least 80 or even 90 wt.% of water. In a specific embodiment the solvent is water and does not contain organic co-solvents. For example, 10% CN132, 27.5% CN435 and 62.5% water; or 21.5% CN132, 21.5% CN435 and 57% water; or 60% CN132 and 40% water; or 49.75% CN132, 49.75% water and 0.5% dodecyltrimethylammonium chloride can give a favourable porous matrix. CN132 and CN435 are curable monomers available from Cray Valley, France. CN132 is a low viscosity aliphatic epoxy acrylate. CN435 (available in the US as SR9035) is an ethoxylated trimethylolpropane triacrylate.

As co-solvents, polar volatile solvents that can be sufficiently removed by drying are preferred. Preferably the boiling point of the co-solvent is lower than that of water. Preferred co-solvents are lower alkyl alcohols, alkanones, alkanals, esters, or alkoxy-alkanes. The term "lower alkyl" means that the alkyl chain contains less than 7, preferably less than 6 and more preferably less than 5 carbon-atoms, most preferably 1-4 carbon atoms. In one embodiment the solvent is a mixture of isopropanol and water. Other suitable co-solvents are *e.g.* methanol, ethanol, 1-propanol, acetone, ethylacetate, dioxane, methoxy ethanol and dimethylformamide.

The solubility of the curable compound in the solvent is another parameter of importance. Preferably the curable composition is a clear solution. The solvent is preferably chosen such that the selected curable compound or compound mixture is completely dissolved. It was found that a clear solution is particularly important when a membrane with a high gloss is desired. When a matte surface is aimed at, a turbid solution may be used and the solvent can be selected accordingly. On the other hand for phase separation to occur, the growing polymer should be insoluble in the solvent. This puts certain restrictions to the curable compounds that can be selected in combination with a certain solvent.

For example, in case of epoxy diacrylate (*e.g.* CN132) it was found that the concentration of monomer in water/ isopropanol (in a ratio between about 6:1 to about 4:1 based on weight) is preferably 38 ± 15 wt.%, more preferably 38 ± 10 wt.% and most preferably 38 ± 5 wt.%. The centre value of '38' in case of epoxy diacrylate may be different for other curable compounds or mixtures of curable compounds. For instance when the epoxy diacrylate is partly replaced by a more water-soluble curable monomer it is possible to increase the water/isopropanol ratio and/or the concentration of the curable compounds.

It is also possible to tune the centre value by changing the monomer system, or by changing the solvent system, or by addition of additives. For example, the centre value of '50' can be achieved by using mixture of monomers CN132 and CN435 (in a ratio of 1/1) with water, or only CN132 with water/isopropanol mixture with a ratio of 9/1, or by addition of a surfactant like dodecyltrimethylammonium chloride or sodium dodecylbenzene sulfonate. The centre value of '60' can be achieved by using only CN132 with water. For each specific case, the skilled person can find non-separating mixtures beforehand by carrying out routine tests beforehand, without any undue burden.

Another acrylate, namely polyurethane-acrylate, dispersed in water, forms a porous membrane after curing in a concentration similar to epoxy-diacrylate. It is impossible to predict this centre value for every possible curable compound and solvent combination since countless combinations of monomers or oligomers with solvent mixtures are possible. However, a skilled person can easily determine by experiment the concentration range for a given curable compound within which a porous membrane is obtained, now that it is clear that such a selection is essential to obtain a porous membrane. Possible methods that can facilitate the selection of suitable combinations are described in *e.g.* EP-A-0 216 622 (cloud point) and US-A-3 823 027 (Hansen system).

When the porous membrane is used as a colorant receiving medium, e.g. an inkjet recording medium, where aqueous inks are used to form images, the membrane should have a hydrophilic character in order to rapidly absorb the aqueous solvents involved. In case the curable composition contains water as main solvent the polymer formed must generally have hydrophobic character because incompatibility with the solvent is important for phase separation to occur. Also for solubility reasons the curable compounds preferably possess hydrophilic character. Although non-soluble monomers can be used in the form of an emulsion, a clear solution is preferred. This implies that for this application the membrane of the invention must have both hydrophilic character and hydrophobic character. These seemingly contradictory demands can be realized by selecting a curable compound that has an amphiphilic structure: a part of the molecule is hydrophilic and another part has a hydrophobic character. An amphiphilic monomer may have both hydrophilic and hydrophobic groups or may have amphiphilic groups (e.g. a (1,2- or 1,3-) propylene oxide chain or a (1,2-, 1,3- or 1,4-) butylene oxide chain). Examples of hydrophobic groups are aliphatic or aromatic groups, alkyl chains longer than $C_3$ and the like. An alternative approach is to include in the curable composition curable compounds that are hydrophilic and those that are hydrophobic. The latter method allows the properties of the membrane to be controlled by varying the ratio of both types of curable compounds. Hydrophilic monomers are for example water soluble monomers and monomers having hydrophilic groups such as hydroxy, carboxylate, sulfate, amine, amide, ammonium, ethylene oxide chain and the like. Amphiphilicity can be obtained in several ways. Amphiphilic monomers can for instance be made by introducing a polar group (such as hydroxy, ether, carboxylate, sulfate, amine, amide, ammonium, *etc.*) into the structure of a hydrophobic monomer. On the other hand starting from a hydrophilic structure an amphiphilic monomer can be made by increasing the hydrophobic character by introducing *e.g.* alkyl or aromatic groups.

Examples of suitable amphiphilic monomers are: oligo(ethylene glycol) (meth)acrylates (typically having a molar weight (MW) of <500), poly(propylene glycol) (di)(meth)acrylate, poly(propylene glycol) glycerolate (di)(meth)acrylate, oligo(propylene glycol) (di)(meth)acrylate, oligo(propylene glycol) glycerolate (di)(meth)acrylate, poly(butylene oxide) (di)(meth)acrylate, poly(butylene oxide) glycerolate (di)(meth)acrylate, oligo(butylene oxide) (di)(meth)acrylate, oligo (butylene oxide) glycerolate (di)(meth)acrylate, ethoxylated bisphenol-A (di)(meth)acrylates, propoxylated bisphenol-A (di)(meth)acrylates, ethoxylated neopentylglycol (di)(meth)acrylate, propoxylated neopentylglycol (di)(meth)acrylate, ethoxylated aliphatic diols (hexanediol, octanediol, decanediol, etc.), (di)(meth)acrylates, propoxylated aliphatic diols (hexanediol, octanediol, decanediol, etc.), (di)(meth)acrylates, N-alkylacrylamides, propoxylated trimethylolpropane (meth)acrylates (mono-, di-, or tri(meth)acrylates), propoxylated glyceryl (meth)acrylates (mono-, di-, or tri(meth)acrylates), propoxylated pentaerythitol (meth)acrylates (mono-, di-, tri-, or tetra-(meth)acrylates), propoxylate pentaerythitol tetraacrylate, vinyl pyridine, hydroxyalkyl (meth)acrylate, and N,N'-(m)ethylene-bis(acrylamide).

Examples of suitable hydrophilic monomers are poly(ethylene oxide) (di)(meth)acrylates, poly(ethylene oxide) glycerolate (di)(meth)acrylates, oligo(ethylene oxide) (di)(meth)acrylates, oligo(ethylene oxide) glycerolate (di)(meth) acrylates, ethoxylated trimethylolpropane (meth)acrylates (mono-, di-, or tri(meth)acrylates), ethoxylated glyceryl (meth) acrylates (mono-, di-, or tri(meth)acrylates), ethoxylated pentaerythitol (meth)acrylates (mono-, di-, tri-, or tetra-(meth) acrylates), (meth)acrylic acid, (meth)acrylamide, vinyl pyrrolidone, allyl amines, vinyl amines, 2-(dimethylamino)ethyl (meth)acrylate, 3-(dimethylamino)propyl (meth)acrylate, 2-(diethylamino)ethyl (meth)acrylate, 2-(dimethylamino)ethyl (meth)acrylamide, 3-(dimethylamino)propyl (meth)acrylamide, 2-(dimethylamino)ethyl (meth)acrylate quaternary ammonium salt (chloride or sulfate), 2-(diethylamino)ethyl (meth)acrylate quaternary ammonium salt (chloride or sulfate), 2-(dimethylamino)ethyl (meth)acrylamide quaternary ammonium salt (chloride or sulfate), and 3-(dimethylamino)propyl (meth)acrylamide quaternary ammonium salt (chloride or sulfate).

Examples of suitable hydrophobic monomers are: alkyl (meth)acrylates (*e.g.* ethyl acrylate, n-butyl acrylate, n-hexylacrylate, octylacrylate, laurylacrylate), aromatic acrylates (phenol acrylate, alkyl phenol acrylate, *etc.*), aliphatic diol (di)(meth)acrylates (*e.g.* 1,4-butanediol diacrylate, 1,6-hexanediol diacrylate, hydroxypivalic acid neopentylglycol diacrylate, neopentylglycol diacrylate, tricyclodecannedimethanol diacrylate), trimethylolpropane triacrylate, glyceryl triacrylate, pentaerythitol triacrylate, pentaerythitol tetraacrylate, dipentaerythritol pentaacrylate, dipentaerythritol hexaacrylate, ditrimethylolpropane tetraacrylate, styrene derivatives, divinylbenzene, vinyl acetate, vinyl alkyl ethers, alkene, butadiene, norbornene, isoprene, polyester acrylates having alkyl chain longer than $C_4$, polyurethane acrylates having alkyl chain longer than $C_4$, and polyamide acrylates having alkyl chain longer than $C_4$.

Highly reactive monomers give fast phase separation and are especially preferred. Very suitable for the current invention are epoxy-acrylates. Monomers can have one, two or more acrylate groups in one molecule. Preferably the monomers used in the invention have at least two acrylate groups per molecule. For a rapid phase separation to occur it is sufficient that only small amounts of theses reactive monomers are present in the curable composition: for instance 0.5 wt% or even less epoxy-acrylate based on the total composition was found to be sufficient to obtain the phase separation that leads to the porous membrane of the invention as long as the total concentration of curable monomers is high enough. In most cases however more than 0.5 wt% of epoxy-acrylates will be used, typically from 0.5 to 55 wt. %, *e.g.* 5 wt% or 10 wt% or 50 wt% of the curable composition. Next to the epoxy-acrylate any other type of curable monomer may be used. So the curable composition may comprise one, two, three or more types of curable monomers.

Preferably the curable composition comprises between 1-100 wt% of amphiphilic monomers, more preferably between 10-80 wt%, most preferably between 40-70wt% based on the total amount of curable monomers. The curable composition may additionally comprise up to 99 wt% of hydrophilic or hydrophobic monomers, preferably between 30-60 wt% based on the total amount of curable monomers. Alternatively a mixture of between 1-99 wt%, preferably between 30-80 wt% of hydrophilic monomers and between 1-99 wt%, preferably between 10-80 wt%, more preferably between 20-70 wt% of hydrophobic monomers is applied.

Good results are obtained with curable compounds that have a restricted water reducibility. Preferably water is miscible with the curable monomer at 25 °C in a weight ratio of between 2/98 and 55/45, more preferably between 4/96 and 51/49, even more preferably between 10/90 and 50/50. Many suitable curable compounds are amphiphilic in nature. A suitable concentration of the monomer can be achieved by addition of a co-solvent, a surfactant, by adjusting the pH of the composition or by adding monomers to the mixture, which monomers maintain a good solubility at higher water loads. The miscibility ratios of water with the latter monomers are typically larger than 50 wt.% at 25 °C.

Another possible method of achieving the porous membrane of the invention is applying a mixture of a monomer having a poor miscibility with water, typically miscibility ratios of water with monomer at 25 °C lower than 2 wt.%, with a monomer having a good miscibility, *i.e.* a miscibility of water in the monomer at 25 °C larger than 50 wt.%. Many different types of monomers can be successfully applied in the invention by carefully selecting combinations of two, three or more types of monomers and optimising their respective concentrations and solvent composition.

Suitable monomers exhibiting a miscibility with water at 25°C in a weight ratio water/monomer between 2/98 and 50/50 are: poly(ethylene glycol) diacrylate (*e.g.* MW<500, *e.g.* triethylene glycol diacrylate, tetraethylene glycol diacrylate, etc.), ethylene glycol epoxylate dimethacrylate, glycerol diglycerolate diacrylate, propylene glycol glycerolate diacrylate, tripropylene glycol glycerolate diacrylate, oligo(propylene glycol) diacrylate, poly(propylene glycol) diacrylate, oligo(propylene glycol) glycerolate diacrylate, poly(propylene glycol) glycerolate diacrylate, oligo(butylene oxide) diacrylate, poly(butylene oxide) diacrylate, oligo(butylene oxide) glycerolate diacrylate, poly(butylene oxide) glycerolate diacrylate, ethoxylated trimethylolpropane triacrylate (ethoxylation 3-10 mol), ethoxylated bisphenol-A diacrylate (ethoxylation 3-10 mol), 2-hydroxyethyl acrylate, 2-hydroxypropylacrylate, 2-hydroxy-3-phenoxy propyl acrylate, 2-(ethoxyethoxyl)ethylacrylate, N,N'-(m)ethylenebis(acrylamide) or combinations thereof. Also suitable are commercially available compounds such as CN129 (an epoxy acrylate), CN131B (a monofunctional aliphatic epoxy acrylate), CN133 (a trifunctional aliphatic epoxy acrylate), CN9245 (a trifunctional urethane acrylate), CN3755 (an amino diacrylate), CN371 (an amino diacrylate), all from Cray Valley, France.

Suitable monomers having a good miscibility with water (weight ratio water/monomer larger than 50/50 at 25 °C) are: poly(ethylene glycol) (meth)acrylates (preferably MW>500), poly(ethylene glycol) di(meth)acrylates (MW>500), ethoxylated trimethylolpropane triacrylates (ethoxylation more than 10 mol), (meth)acrylic acid, (meth)acrylamide, 2-(dimethylamino)ethyl (meth)acrylate, 3-(dimethylamino)propyl (meth)acrylate, 2-(diethylamino)ethyl (meth)acrylate, 2-(dimethylamino)ethyl (meth)acrylamide, 3-(dimethylamino)propyl (meth)acrylamide, 2-(dimethylamino)ethyl (meth) acrylate quarternary ammonium salt (chloride or sulfate), 2-(diethylamino)ethyl (meth)acrylate quarternary ammonium salt (chloride or sulfate), 2-(dimethylamino)ethyl (meth)acrylamide quarternary ammonium salt (chloride or sulfate), 3-(dimethylamino)propyl (meth)acrylamide quarternary ammonium salt (chloride or sulfate) and combinations thereof.

Suitable monomers having a poor miscibility with water (weight ratio water/monomer smaller than 2/98 at 25 °C) are: alkyl (meth)acrylates (e.g. ethyl acrylate, n-butyl acrylate, n-hexylacrylate, octylacrylate, laurylacrylate), aromatic acrylates (phenol acrylate, alkyl phenol acrylate, *etc.*), aliphatic diol (di)(meth)acrylates (*e.g.* 1,4-butanediol diacrylate, 1,6-hexanediol diacrylate, hydroxypivalic acid neopentylglycol diacrylate, neopentylglycol diacrylate, tricyclodecanedimethanol diacrylate), trimethylolpropane triacrylate, glyceryl triacrylate, pentaerythitol triacrylate, pentaerythitol tetraacrylate, dipentaerythritol pentaacrylate, dipentaerythritol hexaacrylate, ditrimethylolpropane tetraacrylate, styrene derivatives, divinylbenzene, vinyl acetate, vinyl alkyl ethers, alkene, butadiene, norbonene, isoprene, polyester acrylates having alkyl chain longer than $C_4$, polyurethane acrylates having alkyl chain longer than $C_4$, polyamide acrylates having alkyl chain longer than $C_4$, and combinations thereof.

Preferably the curable composition comprises between 1-100 wt% of monomers that are miscible with water in a ratio water/monomer of between 2/98 and 50/50 at 25°C, more preferably between 10-80 wt%, most preferably between 40-70wt% based on the total amount of curable monomers. The curable composition may additionally comprise up to 99 wt.%, preferably between 30-60 wt.% of monomers that are miscible with water in a ratio water/monomer larger than 50/50 at 25 °C, based on the total amount of curable monomers. Also monomers having a poor miscibility may be present in the mixture up to 99 wt.%. Another way of obtaining a membrane according the invention is to combine between 1 and 99 wt%, preferably between 30 and 80 wt% of monomers having a good miscibility with water and between 1-99 wt.%, preferably between 10-80 wt.%, more preferably between 20-70 wt.% of monomers that have a poor miscibility with water in a ratio water/monomer less than 2/98 at 25°C.

To obtain a large difference in solubility between the initial compounds and the resulting polymer and thus a fast phase separation preferably the MW of the initial compounds is not too large, although also with high-MW polymers porous membranes can be realized by careful selection of the solvent. Preferably the MW of the curable monomers or oligomers is less than 10 000 Dalton, more preferably less than 5000 Dalton. Good results are obtained with compounds having a MW of less than 1000 Dalton.

Photo-initiators used in accordance with the present invention can be mixed into the mixture of the curable compound(s), preferably prior to applying the mixture to the support. Suitable photo-initiators are those known in the art such as radical type, cation type or anion type photo-initiators.

Examples of radical type I photo-initiators are $\alpha$-hydroxyalkylketones, such as 2-hydroxy-1-[4-(2-hydroxyethoxy)phenyl]-2-methyl-1-propanone (Irgacure™* 2959: Ciba), 1-hydroxy-cyclohexyl-phenylketone (Irgacure™ 184: Ciba), 2-hydroxy-2-methyl-1-phenyl-1-propanone (Sarcure™ SR1173: Sartomer), oligo[2-hydroxy-2-methyl-l-{4-(l-methylvinyl)phenyl}propanone] (Sarcure™ SR1130: Sartomer), 2-hydroxy-2-methyl-1-(4-tert-butyl-)phenylpropan-1-one, 2-hydroxy-[4'-(2-hydroxypropoxy)phenyl]-2-methylpropan-1-one, 1-(4-Isopropylphenyl)-2-hydroxy-2-methyl-propanone (Darcure™ 1116: Ciba); $\alpha$-aminoalkylphenones such as 2-benzyl-2-(dimethylamino)-4'-morpholinobutyrophenone (Irgacure™ 369: Ciba), 2-methyl-4'-(methylthio)-2-morpholinopropiophenone (Irgacure™ 907: Ciba); $\alpha,\alpha$-dialkoxyacetophenones such as $\alpha,\alpha$-dimethoxy-$\alpha$-phenylacetophenone (Irgacure™ 651: Ciba), 2,2-diethyoxy-1,2-diphenylethanone (Uvatone™ 8302: Upjohn), $\alpha,\alpha$-diethoxyacetophenone (DEAP: Rahn), $\alpha,\alpha$-di-(n-butoxy)acetophenone (Uvatone™ 8301: Upjohn); phenylglyoxolates such as methylbenzoylformate (Darocure™ MBF: Ciba); benzoin derivatives such as benzoin (Esacure™ BO: Lamberti), benzoin alkyl ethers (ethyl, isopropyl, n-butyl, iso-butyl, etc.), benzylbenzoin benzyl ethers, Anisoin; mono- and bis-Acylphosphine oxides, such as 2,4,6-trimethylbenzoyldiphenylphosphine oxide (Lucirin™ TPO: BASF), ethyl-2,4,6-trimethylbenzoylphenylphosphinate (Lucirin$^v$ TPO-L: BASF), bis(2,4,6-trimethylbenzoyl)-phenylphosphine oxide (Irgacure™ 819: Ciba), bis(2,6-dimethoxybenzoyl)-2,4,4-trimethyl-pentylphosphineoxide (Irgacure™ 1800 or 1870). Other commercially available photo-initiators are 1-[4-(phenylthio)-2-(O-benzoyloxime)]-1,2-octanedione (Irgacure™ OXE01), 1-[9-ethyl-6-(2-methylbenzoyl)-9H-carbazol-3-yl]-1-(O-acetyloxime)ethanone (Irgacure™ OXE02), 2-hydroxy-1-{4-[4-(2-hydroxy-2-methyl-propionyl)-benzyl]-phenyl}-2-methyl-propan-1-one (Irgacure™ 127), oxy-phenyl-acetic acid 2-[2 oxo-2-phenyl-acetoxy-ethoxy]-ethyl ester (Irgacure™ 754), oxy-phenyl-acetic-2-[2-hydroxy-ethoxy]-ethyl ester (Irgacure754), 2-(dimethylamino)-2-(4-methylbenzyl)-1-[4-(4-morpholinyl) phenyl]-1-butanone (Irgacure™ 379), 1-[4-[4-benzoylphenyl)thio]phenyl]-2-methyl-2-[(4-methylphenyl)sulfonyl)]-1-propanone (Esacure™ 1001M from Lamberti), 2,2'-bis(2-chlorophenyl)-4,4',5,5'-tetraphenyl-1,2'-bisimidazole (Omnirad™ BCIM from IGM).

Examples of type II photo-initiators are benzophenone derivatives such as benzophenone (Additol™ BP: UCB), 4-hydroxybenzophenone, 3-hydroxybenzophenone, 4,4'-dihydroxybenzophenone, 2,4,6-trimethylbenzophenone, 2-methylbenzophenone, 3-methylbenzophenone, 4-methylbenzophenone, 2,5-dimethylbenzophenone, 3,4-dimethylbenzophenone, 4-(dimethylamino)benzophenone, [4-(4-methylphenylthio)phenyl]phenyl-methanone, 3,3'-dimethyl-4-methoxy benzophenone, methyl-2-benzoylbenzoate, 4-phenylbenzophenone, 4,4-bis(dimethylamino)benzophenone, 4,4-bis(diethylamino)benzophenone, 4,4-bis(ethylmethylamino)benzophenone, 4-benzoyl-N,N,N-trimethylbenzenemethanaminium chloride, 2-hydroxy-3-(4-benzoylphenoxy)-N,N,N-trimethyl-1-propanamium chloride, 4-(13-Acryloyl-1,4,7,10,13-pentaoxatridecyl)benzophenone (Uvecryl™ P36: UCB), 4-benzoyl-N,N-dimethy-N-[2-(1-oxo-2-propenyl)oy] ethylbenzene-methanaminium chloride, 4-benzoyl-4'-methyldiphenyl sulphide, anthraquinone, ethylanthraquinone, anthraquinone-2-sulfonic acid sodium salt, dibenzosuberenone; acetophenone derivatives such as acetophenone, 4'-phenoxyacetophenone, 4'-hydroxyacetophenone, 3'-hydroxyacetophenone, 3'-ethoxyacetophenone; thioxanthenone derivatives such as thioxanthenone, 2-chlorothioxanthenone, 4-chlorothioxanthenone, 2-isopropylthioxanthenone, 4-isopropylthioxanthenone, 2,4-dimethylthioxanthenone, 2,4-diethylthioxanthenone, 2-hydroxy-3-(3,4-dimethyl-9-oxo-9H-thioxanthon-2-yloxy)-N,N,N-trimethyl-1-propanaminium chloride (Kayacure™ QTX: Nippon Kayaku); diones such as benzyl, camphorquinone, 4,4'-dimethylbenzyl, phenanthrenequinone, phenylpropanedione; dimethylanilines such as 4,4',4"-methylidyne-tris(N,N-dimethylaniline) (Omnirad™ LCV from IGM); imidazole derivatives such as 2,2'-bis(2-chlorophenyl)-4,4',5,5'-tetraphenyl-1,2'-bisimidazole; titanocenes such as bis(eta-5-2,4-cyclopentadiene-1-yl)-bis-[2,6-difluoro-3-1H-pyrrol-1-yl]phenyl]titanium (Irgacure™784: Ciba); iodonium salt such as iodonium, (4-methylphenyl)-[4-(2-methylpropyl-phenyl)-hexafluorophosphate (1-). If desired combinations of photo-initiators may also be used.

For acrylates, diacrylates, triacrylates or multifunctional acrylates, type I photo-initiators are preferred, especially alpha-hydroxyalkylphenones, such as 2-hydroxy-2-methyl-1-phenyl propan-1-one, 2-hydroxy-2-methyl-1-(4-tert-butyl-)phenylpropan-1-one, 2-hydroxy-[4'-(2-hydroxypropoxy)phenyl]-2-methylpropan-1-one, 2-hydroxy-1-[4-(2-hydroxyethoxy)phenyl]-2-methyl propan-1-one, 1-hydroxycyclohexylphenylketone and oligo[2-hydroxy-2-methyl-1-{4-(1-methylvinyl)phenyl}propanone], alpha-aminoalkylphenones, alpha-sulfonylalkylphenones and acylphosphine oxides such as 2,4,6-trimethylbenzoyl-diphenylphosphine oxide, ethyl-2,4,6-trimethylbenzoylphenylphosphinate and bis(2,4,6-trimethylbenzoyl)-phenylphosphine oxide, are preferred. Preferably the ratio of photo-initiator and curable compound(s) is between 0.001 and 0.1, more preferably between 0.005 and 0.05, based on weight. It is preferred to minimize the amount of photo-initiator used, in other words preferably all photo-initiator has reacted after the curing step (or curing steps). Remaining photo-initiator may have adverse effects such as yellowing or degradation of dyes in case the membrane is used as a recording medium. When applied as a separation membrane excessive washing may be required to wash out remaining photo-initiator.

When more than one layer is applied in each layer the type and concentration of photo-initiator can be chosen independently. For example, in a multilayer structure the photo-initiator in the toplayer may be different from the photo-initiator in lower layer(s) which can give more efficient curing with low initiator concentrations than when a single initiator is applied throughout all layers. Some types of photo-initiator are more effective in curing the surface, while other types cure much deeper into the layer when irradiated with radiation. For the lower layers a good through cure is important and for a high efficiency of curing it is preferred to select a photo-initiator that has an absorption spectrum not fully overlapping with the spectrum of the photo-initiator applied in the toplayer. Preferably the difference in absorption maximum between photo-initiators in the top layer and in the bottom layer is at least 20 nm. In the case UV radiation is used a light source can be selected having emissions at several wavelengths. The combination of UV light source and photo-initiators can be optimized so that sufficient radiation penetrates to the lower layers to activate the photo-initiators. A typical example is an H-bulb with an output of 600 Watts/inch (240 W/cm) as supplied by Fusion UV Systems which has emission maxima around 220 nm, 255 nm, 300 nm, 310 nm, 365 nm, 405 nm, 435 nm, 550 nm and 580 nm. Alternatives are the V-bulb and the D-bulb which have a different emission spectrum. There needs to be sufficient overlap between the spectrum of the UV light source and that of the photo-initiators. This method allows for thicker layers to be cured efficiently with the same intensity of irradiation.

Additionally by applying different types of photo-initiator characteristics such as gloss and porosity can be optimised to levels not possible with a single type of photo-initiator.

Curing rates may be increased by adding amine synergists to the curable compound. Amine synergists are known to enhance reactivity and retard oxygen inhibition. Suitable amine synergists are e.g. free alkyl amines such as triethylamine, methyldiethanol amine, triethanol amine; aromatic amine such as 2-ethylhexyl-4-dimethylaminobenzoate, ethyl-4-dimethylaminobenzoate and also polymeric amines as polyallylamine and its derivatives. Curable amine synergists such as ethylenically unsaturated amines (e.g. (meth)acrylated amines) are preferable since their use will give less odor, lower volatility and less yellowing due to its ability to be incorporated into the polymeric matrix by curing.

The amount of amine synergists is preferably from 0.1-10 wt.% based on the amount of curable compounds in the curable composition, more preferably from 0.3-3 wt.% based on the amount of curable compounds.

The curable compound mixture is preferably subjected to radiation to obtain the porous membrane. In principle (electromagnetic) radiation of any suitable wavelength can be used, such as for example ultraviolet, visible or infrared radiation, as long as it matches the absorption spectrum of the photo-initiator.

Irradiation by ultraviolet light is preferred. Suitable wavelengths are for instance UV-A (400-320 nm), UV-B (320-280 nm), UV-C (280-200 nm), provided the wavelength matches with the absorbing wavelength of the photo-initiator, if present.

Suitable sources of ultraviolet light are mercury arc lamps, carbon arc lamps, low pressure mercury lamps, medium pressure mercury lamps, high pressure mercury lamps, swirlflow plasma arc lamps, metal halide lamps, xenon lamps, tungsten lamps, halogen lamps, lasers and ultraviolet light emitting diodes. Particularly preferred are ultraviolet light emitting lamps of the medium or high pressure mercury vapor type. In addition, additives such as metal halides may be present to modify the emission spectrum of the lamp. In most cases lamps with emission maxima between 200 and 450 nm are most suitable.

The energy output of the exposing device may be between 20 and 240 W/cm, preferably between 40 and 150 W/cm but may be higher as long as the desired exposure dose can be realised. The exposure intensity is one of the parameters that can be used to control the extent of curing which influences the final structure of the membrane. Preferably the exposure dose is at least 40 mJ/cm$^2$, more preferably between 40 and 600 mJ/cm$^2$, most preferably between 70 and 220 mJ/cm$^2$ as measured by an High Energy UV Radiometer (UV Power Puck™ from EIT - Instrument Markets) in the UV-B range indicated by the apparatus. Exposure times can be chosen freely but need not be long and are typically less than 1 second.

The pH of the curable compositions is preferably chosen between a value of 2 and 11, more preferably between 3 and 8. The optimum pH depends on the used monomers and can be determined experimentally. The curing rate appeared to be pH dependent: at high pH the curing rate is clearly reduced resulting in a less porous membrane. At low pH values (2 and lower) yellowing of the membrane occurs upon aging which is not desired when a good whiteness is preferred.

Where desired, a surfactant or combination of surfactants may be added to the aqueous composition as a wetting agent, to adjust surface tension, or for other purposes such as a good gloss. It is within the ability of one skilled in the art to employ a proper surfactant depending upon desired use and the substrate to be coated. Commercially available surfactants may be utilized, including radiation-curable surfactants. Surfactants suitable for use in the curable composition include nonionic surfactants, ionic surfactants, amphoteric surfactants and combinations thereof. Preferred nonionic surfactants include ethoxylated alkylphenols, ethoxylated fatty alcohols, ethylene oxide/propylene oxide block copolymers, fluoroalkyl ethers, and the like. Preferred ionic surfactants include, but are not limited to, the following: alkyltrimethylammonium salts wherein the alkyl group contains from 8 to 22 (preferably 12 to 18) carbon atoms; alkylbenzyldimethylammonium salts wherein the alkyl group contains from 8 to 22 (preferably 12 to 18) carbon atoms, and ethylsulfate; and alkylpyridinium salts wherein the alkyl group contains from 8 to 22 (preferably 12 to 18) carbon atoms. Surfactants may be fluorine based or silicon based. Examples of suitable fluorosurfactants are: fluoro $C_2$-$C_{20}$ alkylcarboxylic acids and salts thereof, disodium N-perfluorooctanesulfonyl glutamate, sodium 3-(fluoro-$C_6$-$C_{11}$ alkyloxy)-1-$C_3$-$C_4$ alkyl sulfonates, sodium 3-(omega -fluoro-$C_6$-$C_8$ alkanoyl-N-ethylamino)-1-propane sulfonates, N-[3-(perfluorooctanesulfonamide)-propyl]-N,N-dimethyl-N-carboxymethylene ammonium betaine, perfluoro alkyl carboxylic acids (e.g. $C_7$-$C_{13}$-alkyl carboxylic acids) and salts thereof, perfluorooctane sulfonic acid diethanolamide, Li, K and Na perfluoro $C_4$-$C_{12}$ alkyl sulfonates, Li, K and Na N-perfluoro $C_4$-$C_{13}$ alkane sulfonyl-N-alkyl glycine, fluorosurfactants commercially available under the name Zonyl® (produced by E.I. Du Pont) that have the chemical structure of $RfCH_2CH_2SCH_2CH_2CO_2Li$ or $RfCH_2CH_2O(CH_2CH_2O)$. H wherein Rf = $F(CF_2CF_2)_{3-8}$ and x = 0 to 25, N-propyl-N-(2-hydroxyethyl)perfluorooctane sulfonamide, 2-sulfo-1,4-bis(fluoroalkyl)butanedioate, 1,4-bis (fluoroalkyl)-2-[2-N,N,N-tri-alkylammonium) alkyl amino] butanedioate, perfluoro$C_6$-$C_{10}$ alkylsulfonamide propyl sulfonyl glycinates, bis-(N-perfluorooctylsulfonyl-N-ethanolaminoethyl)phosphonate, mono-perfluoro $C_6$-$C_{16}$ alkyl-ethyl phosphonates, and perfluoroalkylbetaine. Also useful are the fluorocarbon surfactants described e.g. in US-A-4 781 985 and in US-A-5 084 340.

Silicon based surfactants are preferably polysiloxanes such as polysiloxane-polyoxyalkylene copolymers. Such copolymers may be for example dimethylsiloxane-methyl (polyoxyethylene) copolymer, dimethylsiloxane-methyl (polyoxyethylene-polyoxypropylene) siloxane copolymer, trisiloxane alkoxylate as a copolymer of trisiloxane and polyether, and siloxane propoxylate as a copolymer of siloxane and polypropylene oxide. The siloxane copolymer surfactants may be prepared by any method known to those having skill in the art and can be prepared as random, alternate, block, or graft copolymers. The polyether siloxane copolymer preferably has a weight-average molecular weight in a range of 100 to 10,000. Examples of polyether siloxane copolymers commercially available in the market include SILWET DA series, such as SILWET 408, 560 or 806, SILWET L series such as SILWET-7602 or COATSIL series such as COATSIL 1211, manufactured by CK WITCO; KF351A, KF353A, KF354A, KF618, KF945A, KF352A, KF615A, KF6008, KF6001, KF6013, KF6015, KF6016, KF6017, manufactured by SHIN-ETSU; BYK-019, BYK-300, BYK-301, BYK-302, BYK-306, BYK-307, BYK-310, BYK-315, BYK-320, BYK-325, BYK-330, BYK-333, BYK-331, BYK-335, BYK-341, BYK-344, BYK-345, BYK-346, BYK-348, manufactured by BYK-CHEMIE; and GLIDE series such as GLIDE 450, FLOW series such as FLOW 425, WET series such as WET 265, manufactured by TEGO.

Surfactants may be added in the curable composition and/or may be introduced by impregnation of the membrane for the purpose of improving printer transportability, blocking resistance and waterproofness. The surfactant, when used, preferably is present in an amount between 0.01 and 2% based on the dry weight of the membrane, more preferably between 0.02 and 0.5%. Preferably the surfactants are soluble in the composition in the concentration used. When an aqueous solvent is used preferably the solubility of the surfactant in water at 25°C is at least 0.5%.

For a fast uptake of especially aqueous inks the surface needs to be hydrophilic. The hydrophilicity of the surface is suitably expressed by measuring the contact angle of water drops. Values below 80° are indicative for hydrophilic surfaces and are preferred for applications as ink receiving layer.

In accordance with the present invention, a membrane is referred to as "porous, nanoporous or microporous" if it contains a substantial amount of pores preferably having a diameter of between 0.0001 and 2.0 $\mu$m. More preferably the majority of the pores of the porous membrane of the invention has a size of between 0.001 and 1.0 $\mu$m, even more preferably between 0.003 and 0.7 $\mu$m. For selected embodiments the average pore diameter preferably is between 0.01 and 1.0 $\mu$m, more preferably between 0.03 and 0.4 $\mu$m. For other embodiments very small average pore sizes are preferred e.g. between 0.0001 and 0.01 $\mu$m. The latter embodiments include reversed osmosis and nanofiltration. There is no limitation as to the pore shape. The pores can for instance be spherical or irregular or a combination of both. Preferably the pores are inter-connected, since this will contribute to a high flux or quick solvent absorption.

The porosity of the membrane is preferably between 5 and 90 percent as determined by analysing SEM cross-section images. The porosity is determined by the following formula:

$$\text{(Dry thickness / coated amount of solids per m}^2\text{)} * 100 \% - 100 \%$$

wherein the density of the coated solids is assumed to be 1 kg/dm$^3$. More preferably the porosity is between 10 and 70 percent, even more preferably between 20 and 50%.

For membranes to exhibit a high gloss, the surface layer is preferably smooth and the size and total area of the pores on the surface of the membrane must be controlled within certain limits. A good gloss without loss in ink absorption speed can be obtained by controlling the area occupied by pores to preferably between 0.1 and 30%. More preferably the pore area is between 0.2 and 25%, even more preferably between 0.3 and 18% for maximum gloss with high ink absorption speed. Pore area is determined by diameter and amount of pores. This means that for a certain pore area the amount of pores varies depending on the pore diameter. In general a low frequency of large pores is less preferred than a high frequency of small pores. The absolute average pore diameter of the surface pores is preferably smaller than 1.2 $\mu$m, more preferably between 0.02 and 1 $\mu$m, even more preferably between 0.05 and 0.7 $\mu$m. For selected embodiments a range between 0.06 and 0.3 $\mu$m is preferred. Good gloss can be additionally expressed in a surface roughness (Ra) value. Ra values are influenced by pore diameter/pore area. Preferred Ra values for membranes having a good gloss are below 0.8 $\mu$m, more preferably below 0.5 $\mu$m, even more preferably below 0.3 $\mu$m and most preferably below 0.2 $\mu$m. A glossy appearance is thought to be determined mainly by the smoothness of the surface area between the pores. In ISO 13565-1 (1998) and JIS B0671-1 (2002) a method is described by which it is possible to determine the Ra value of the surface eliminating the contribution of the pores to the calculation. In a special embodiment the membrane is composed of distinct structures: an isotropic bulk matrix in the form of an open polymer network and a thin surface layer of a completely different structure. This surface layer or skin layer is a continuous layer having pores that are not connected and can be described as a perforated continuous layer. By varying the process and recipe conditions the number and size of surface pores can be controlled according to desired specifications. This surface layer is thought to contribute to the gloss of the membrane. For applications such as reversed osmosis it may be preferred that there are no pores at all at the surface or only pores of a very small diameter, which means that the skin layer can be regarded as a closed continuous layer. For the application as ink receiving layer the surface layer is assumed to prevent the dyes present in the ink from being absorbed deep into the membrane which would lead to a low optical density of the printed image. So the surface layer contributes to a high optical density. On the other hand a skin layer reduces the flow rate through the membrane which may result in worse drying properties. Therefore preferably this skin layer is thin, having a thickness less than 0.5 $\mu$m, more preferably the thickness of the skin layer is less than 0.2 $\mu$m. Except for the thin skin layer the membrane is preferably symmetric, although an asymmetric structure to some extent is allowable.

An important characteristic of the membrane is the swellability of the porous layer. In addition to the porosity the swellability contributes to the speed and capacity of solvent uptake. Depending on the desired properties, a certain balance can be selected between the porosity and the swellability. To attain a certain level of solvent uptake a high porosity can be combined with a low swelling behaviour or *vice versa.* This enables a large variation in membrane structures all with a good solvent uptake speed. Preferably the swelling is between 1 and 50 $\mu$m, more preferably between 2 $\mu$m and 30 $\mu$m, most preferably between 3 and 20 $\mu$m. Because the dry thickness of the porous layer may vary depending on the desired application the swelling is more appropriately expressed in a relative way as a percentage of the dry thickness. Preferably the swelling is at least 5%, more preferably between 6 and 100% of the dry thickness of the porous membrane, even more preferably between 10 and 80%. The swelling in this invention is determined by subtracting the dry thickness of the layer before swelling from the swollen thickness of the layer after swelling, wherein the swollen thickness represents the thickness of the layer after immersion in 20 °C distilled water for 3 minutes, and dry thickness represents the thickness of the layer being allowed to stand at 23 °C and 60%RH for more than 24 hours. The thickness of the layer can be determined by various methods. For example, there is a method in which after a sample is immersed in distilled water at a given temperature for a given time to swell the layer, while the swelling process is observed by touching the swollen layer continuously with a needle positioning sensor. There is also a method to measure the height of the swollen layer by optical sensor without touching the surface, and subtracting the height of the dry layer to know the swelling amount of the layer. The degree of swelling can be controlled by the types and ratio of monomers, the extent of curing/cross-linking (exposure dose, photo-initiator type and amount) and by other ingredients (*e.g.* chain transfer agents, synergists).

Surprisingly the membrane due to its swelling character showed high image densities when used as an ink receiving layer and an improved ozone fastness. Without wishing to be bound by theory, the researchers assume that due to swelling the colorants are incorporated in the polymer network structure and after drying are protected against the influences of ozone and other gasses. In a porous network without swelling capability the colorants can penetrate deep into the layer while by swelling the colorants are thought mainly to be trapped in the surface region of the layer explaining the increased density observed.

A disadvantage of a strongly swelling porous layer is a rather weak scratch resistance. A large swellability is achieved by a low degree of crosslinking which makes the structure of the membrane sensitive to physical disturbance. Surprisingly it was found that a second curing treatment of the dry membrane after drying is completed, is more effective for enhancing the robustness than intensifying the curing of the wet coated layer. Again, without wishing to be bound by theory, the inventors suggest that by drying the unreacted curable double bonds are moving closer to each other, thereby increasing the probability of crosslinking upon curing. This second curing step may be done by UV-curing, but also other methods are suitable such as EB-curing or other sources of radiation, *e.g.* those mentioned hereinabove. In case UV curing is applied for the second curing, at least part of the photo-initiator need to remain in reactive form after the first curing step. On the other hand it is important that finally essentially all photo-initiator has reacted, because remaining photo-initiator may lead to yellowing of the membrane due to aging which is undesirable for certain applications. This can be easily achieved by tuning the initial concentration of the photo-initiator in the recipe. Alternatively the photo-initiator for the second curing is added separately e.g. by impregnation.

Instead of a second curing of the membrane in the dry state, in another embodiment the membrane is cured while being wet. To this end, the second curing can be done shortly after the first curing, without an intermediate drying step. Another way is to prewet the dried membrane by a liquid that may contain one or more ingredients such as surfactants. An advantage of this procedure is that in the wet state the membrane structure changes upon curing when the membrane is swellable in the liquid applied. So properties as porosity can be modified by performing a second curing step when the membrane is in the swollen state. By this method a wider range of materials and process conditions become suitable since tuning of the structure remains possible after the initial curing step. In between both curing steps an impregnation can be carried out. By impregnation compounds can be brought into the membrane that are not very well compatible with the curable composition of the first curing step. When the structure of the membrane after the first curing is already good, a second curing is superfluous and just drying after impregnation is generally sufficient. With a good process design more than two curing steps will in general not result in improved properties, however certain circumstances such as limited UV intensity may make multiple curing beneficial.

Preferably, the exposure dose in the second curing step is between 80 and 300 mJ/m$^2$, more preferably between 100 and 200 mJ/m$^2$ as measured by an High Energy UV Radiometer (UV Power Puck™ from EIT - Instrument Markets) in the UV-B range indicated by the apparatus.

The porous membrane may also comprise one or more non-curable water soluble polymers and/or one or more hydrophilic polymers that are not crosslinked by exposure to radiation. The non-curable water soluble polymer may be added to the curable compound mixture before curing or applied to the cured membrane after curing.

The porous membrane of the invention may comprise up to 40 gram of a non-curable water soluble polymer per 100 gram of the dry layer. More preferably, the amount of non-curable water soluble polymer is between 0.5 and 10 gram per 100 gram of the membrane.

Suitable water soluble polymers are described for example in EP-A-1 437 229. Thus the watersoluble polymer may be one or more of a polyvinyl alcohol-based resin which is a resin having a hydroxy group as a hydrophilic structure unit (polyvinyl alcohol (PVA), acetoacetyl-modified polyvinyl alcohol, cation-modified polyvinyl alcohol, anion-modified polyvinyl alcohol, silanol-modified polyvinyl alcohol, polyvinyl acetal and the like a cellulose-based resin (methyl cellulose (MC), ethyl cellulose (EC), hydroxyethyl cellulose (HEC), carboxymethyl cellulose (CMC), hydroxypropyl cellulose (HPC), hydroxyethylmethyl cellulose, hydroxypropylmethyl cellulose and the like), chitins, chitosans, starches, ether bond-carrying resins (polyoxyethylene oxide (PEO), polypropylene oxide (PPO), polyethylene glycol (PEG), polyvinyl ether (PVE) and the like), a carbamoyl group-carrying resin (polyacrylamide (PAAM), polyvinyl pyrrolidone (PVP), polyacrylic acid hydrazide and the like) and the like; as well as polyacrylates having carboxyl groups as free groups, maleic acid resins, alginates, gelatins and the like. Preferred non-curable watersoluble polymers are polyvinylalcohol or (partly) saponified polyvinylalcohol. Suitable copolymers of PVA are disclosed in WO-A-03/054029, such as for example PVA-NVF copolymers.

Also preferred as non-curable water soluble polymers are gelatins or modified gelatins. For obtaining a membrane with a high gloss it was found to be beneficial to include in the curable composition a gelatin, preferably a modified gelatin. Gelatins with high iso-electric point can be used as described in WO-A-2005032837. Both limed and acid process can be used, however acid type gelatins can be advantageously applied as described in WO-A-2005032836. Surprisingly especially modified gelatins were found to contribute to a higher gloss, in particular those gelatins that have been modified to exhibit surface active properties. The term "modified gelatin" as used herein refers to gelatin compounds in which at least part of the $NH_2$ groups is chemically modified. A variety of modified gelatins can be used like phthalated and acetylated gelatins and the like. Good results are obtained, when at least 30% of the $NH_2$ groups of the gelatin is modified by a condensation reaction with a compound having at least one carboxylic group as described among others in DE-A-197 21 238. The compound having at least one carboxylic group can have another functional group like a second carboxylic group and a long aliphatic tail, which in principle is not modified. Long tail in this context means from at least 5 to as much as 20 C atoms. This aliphatic chain can be modified still to adjust the properties such as the water solubility and ink receptivity. Particularly preferred gelatins of this type are succinic acid modified gelatins in which the succinic acid moiety contains an aliphatic chain from at least 5 to 20 carbon-atoms, where the chain can still be modified to a certain extent to adjust the water soluble properties or ink receptive properties. Most preferred is the use of dodecenylsuccinic acid modified gelatin, in which at least 30% of the $NH_2$ groups of the gelatin have been modified with said dodecenylsuccinic acid.

Other suitable methods for obtaining modified gelatins are described in EP-A-0 576 911, V.N. Izmailova, et al. (Colloid Journal, vol. 64, No. 5, 2002, page 640-642), and O. Toledano, et al. (Journal of Colloid and Interface Science vol.: 200, 1998, page 235-240).

Other suitable modified gelatins giving good results are gelatins modified to have quaternary ammonium groups. Examples of such gelatins are the "Croquat™" gelatins produced by Croda Colloids Ltd.

Gelatins that may be used as the starting point for modified gelatin may include any known gelatin, whether lime-processed or acid processed and can for instance be selected from the group of lime treated bone or hide gelatin of pig, cattle or fish, recombinant gelatin, or combinations thereof.

In a preferred embodiment the gelatin is not added as such to the curable composition but is transferred into a curable compound by modifying the gelatin with a suitable curable compound. For example a curable gelatin is formed by modifying gelatin with glycidylacrylate or glycidylmethacrylate (GMA). GMA is preferred. At pH=9 the epoxy group of the glycidyl group reacts with the $NH_2$-groups of lysine in gelatin. The ratio of GMA and gelatin is preferably between 3 and 30, more preferably between 5 and 20. Adding this compound to the curable composition surprisingly resulted in an improved gloss of the porous membrane. In case of a multilayer membrane this compound need only to be added to the composition for the toplayer. Preferably the quantity of GMA-modified gelatin is up to 20 wt.% based on the amount of curable compounds in the composition, more preferably between 0.5 and 12 weight %, most preferably between 1 and 5 weight %.

In another embodiment α-substituted acrylates, such as methacrylates and itaconic acids are added to the curable composition. This surprisingly improved the gloss level of the porous membrane formed after curing. Addition of α-substituted acrylates appears to enhance the formation of a smooth surface layer that improves the glossy appearance of the membrane. Without wishing to be bound by theory the researchers assume that a reduced cross-linking reactivity at the surface might explain the increased gloss level. Several approaches proved to enhance the gloss. Not only a low amount of less-reactive monomers such as α-substituted acrylates, but also the use of chain transfer agents and/or less reactive photo-initiators in the toplayer leads to higher gloss levels. Preferably the amount of α-substituted acrylates added to the curable composition is up to 0.20 mmol per gram curable monomer based on the total amount of curable monomers in the composition, more preferably between 0.001 and 0.18 mmol per gram curable monomer, most preferably between 0.005 and 0.13 mmol per gram. In case the porous membrane is a multilayer this compound is most effective when added to the composition for the toplayer, but it may be present in other layers as well. Examples of α-substituted acrylates are methacrylates such as glycidylmethacrylate (GMA) and derivatives, hydroxyethylmethacrylate (HEMA), polyethyleneglycol-1100 methacrylate (PEG-1100-MA), methacrylic acid, 2-(dimethylamino) ethylmethacrylate, ethacrylates, and itaconic acids, such as the dipotassium salt of itaconic acid bis-(3-sulfopropyl) ester.

The combination of these α-substituted acrylates with gelatins surprisingly lead to even higher gloss values. It was found that relatively small amounts of gelatin were sufficient to obtain the desired result. Due to the fact that the working temperature usually is room temperature (20-25°C) gelatins with a reduced MW that do not gel at those temperatures are preferred. The average molecular weight (MW) of the gelatins applied is preferably lower than 100 kDa, more preferably lower than 70 kDa and most preferably between 2 and 50 kDa. The ratio of gelatin and said α-substituted acrylates preferably is below 0.30 g per mmol of α-substituted acrylate, more preferably between 0.001 and 0.15 g/mmol, most preferably between 0.005 and 0.13 g/mmol.

In addition to a non-curable water soluble polymer, crosslinking agent may be added, preferably up to 20 wt. %, more preferably between 0.5 and 5 wt.%, based on the amount of non-curable water soluble polymer in the layer. Suitable crosslinking agents are described in EP-A-1 437 229. Thus the crosslinking agent may be one or more of aldehyde-based compounds such as formaldehyde, glyoxal, glutaraldehyde and the like; a ketone-based compound such as diacetyl, cyclopentanedione and the like; an activated halide such as bis(2-chlorethylurea)-2-hydroxy-4,6-dichloro-1,3,5-triazine, 2,4-dichloro-6-S-triazine sodium salt and the like; an activated vinyl compound such as divinylsulfonic acid, 1,3-vinylsulfonyl-2-propanol, N,N'-ethylenebis(vinylsulfonylacetamide), 1,3,5-triacryloylhexahydro-S-triazine and the like; an N-methylol compound such as dimethylol urea, methylol dimethylhydantoin and the like; a melamine resin (for example, methylol melamine, alkylated methylol melamine); an epoxy resin; an isocyanate compound such as 1,6-hexamethylene diisocyanate and the like; aziridine compound described in US-A-3 017 280 and US-A-2 983 611; a carboxyimide compound described in US-A-3 100 704; an epoxy-based compound such as glycerol triglycidyl ether and the like; an ethyleneimino-based compound such as 1,6-hexamethylene -N,N'-bisethylene urea and the like; a halogenated carboxyaldehyde-based compound such as mucochloric acid, mucophenoxychloric acid and the like; a dioxane-based compound such as 2,3-dihydroxydioxane and the like; a boron compound such as boric acid, borax and borate; a metal-containing compound such as titanium lactate, aluminum sulfate, chromium alum, potassium alum, zirconyl acetate, chromium acetate and the like, a polyamine compound such as tetraethylene pentamine, a hydrazide compound such as adipic acid dihydrazide, a low molecular weight compound or polymer having two or more oxazoline group and the like. These crosslinking agents can be used alone or in combination.

In one embodiment at least two mixtures are coated on a substrate of which at least one is a curable compound mixture, which after curing and drying results in a medium comprising at least one top layer and at least one bottom layer that is closer to the substrate than the top layer. At least the top layer, and preferably also the bottom layer comprises the porous membrane of this invention. For a two-layer membrane structure the bottom layer preferably has a dry thickness of between 3 and 50 $\mu$m, preferably between 7 and 40 $\mu$m, most preferably between 10 and 30 $\mu$m and the toplayer preferably between 1 and 30 $\mu$m, preferably between 2 and 20 $\mu$m, most preferably between 4 and 15 $\mu$m.

In another embodiment a substrate is coated with at least three layers of which at least one layer, preferably the top (outer) layer comprises a curable compound mixture. After applying the curable compositions to the substrate, curing and drying, a medium comprising at least three layers is formed, which three layers then comprise at least one bottom layer with a dry thickness of between 3 and 50 $\mu$m, preferably between 5 and 40 $\mu$m, most preferably between 7 and 30 $\mu$m, at least one middle layer with a dry thickness of between 1 and 30 $\mu$m, preferably between 2 and 20 $\mu$m, most preferably between 3 and 15 $\mu$m, and at least one toplayer above the middle layer. The top layer preferably has a dry thickness of less than 10 $\mu$m, preferably of between 0.1 and 8 $\mu$m, most preferably between 0.4 and 4 $\mu$m.

In a preferred embodiment, the substrate is coated with two, three or more curable compound mixtures, which after curing and drying results in a recording medium. Said mixtures may have the same or different compositions depending on the results one likes to achieve. Furthermore the curable compound mixtures might be coated simultaneously and then cured or might be coated consecutively and cured. Consecutively means, that a first mixture is coated, then cured; then a second mixture is coated, cured and so on. In the latter situation it is likely that at least a part of the second mixture is impregnating the first layer so care has to be taken that the pores of the resulting membrane do not become blocked.

Layers that contain particles have the disadvantage that higher particle loads can reduce structural integrity of the layer. Further, particles can disperse incident light, reducing color density in recording media, especially of blue colors, a phenomenon well known in conventional color photography. Also it is difficult to achieve a good gloss with layers that are porous. Preferably the top layer and the middle layer, more preferably all layers comprising the porous membrane of the present invention are essentially free from organic or inorganic particles that are capable of absorbing aqueous solvents. More preferably the porous membrane is essentially free from particles. Essentially free means here that the amount or location of particles is such that there is no significant decrease in gloss or colour density. A quantity of less than 0.1 g/m$^2$ is regarded as essentially free. Preferably all porous layers are essentially free from particles. An exception are matting agents, that are added to prevent handling problems such as blocking, caused by a too smooth surface and which preferably are added in the top layer of the medium in a low amount. Usually less than 0.5% of the total solid content of the porous layer(s) is formed by matting agents.

It may be desirable to add in the toplayer a matting agent (also known as anti-blocking agents) to reduce friction and to prevent image transfer when several printed inkjet media are stacked. Very suitable matting agents have a particle size from 1 to 20 $\mu$m, preferably between 2 and 10 $\mu$m. The amount of matting agent is from 0.005 to 1 g/m$^2$, preferably from 0.01 to 0.4 g/m$^2$. In most cases an amount of less than 0.1 g/m$^2$ is sufficient. The matting agent can be defined as particles of inorganic or organic materials capable of being dispersed in an aqueous composition. The inorganic matting agents include oxides such as silicon oxide, titanium oxide, magnesium oxide and aluminium oxide, alkali earth metal salts such as barium sulphate, calcium carbonate, and magnesium sulphate, and glass particles. Furthermore inorganic matting agents can be used, e.g. those disclosed in DE-A-25 29 321, GB-A-760 775 and GB-A-1 260 772, and US-A-4 021 245 and US-A-4 029 504. Suitable organic matting agents include starch, cellulose esters such as cellulose acetate propionate, cellulose ethers such as ethyl cellulose, and synthetic resins. The synthetic resins are water insoluble or sparingly soluble polymers which include a polymer of an alkyl(meth)acrylate, an alkoxyalkyl(meth)acrylate, a glycidyl (meth)acrylate, a (meth)acrylamide, a vinyl ester such as vinyl acetate, acrylonitrile, an olefin such as ethylene, or styrene and a copolymer of the above described monomer with other monomers such as acrylic acid, methacrylic acid, alpha, beta -unsaturated dicarboxylic acid, hydroxyalkyl(meth)acrylate, sulfoalkyl(meth)acrylate and styrene sulfonic acid. Further, a benzoguanamin-formaldehyde resin, an epoxy resin, polyamide, polycarbonates, phenol resins, polyvinyl carbazol or polyvinylidene chloride can be used. As organic matting agentsthe compounds disclosed in GB-A-1 055 713, US-A-3 591 379, US-A-3 754 924 and US-A-3 767 448, JP-A-49106821 (corresponding to US-A-4 056 396) and JP57014835 (corresponding to US-A-4 396 706) can be used as well. The matting agents may be used alone or in combination.

Usually the porous membrane has an opaque appearance due to the porous structure of the matrix. Investigations revealed that a higher image density can be obtained when the outer layer or layers are somewhat transparent. This can be achieved by modifying the structure of the outer layer in such a way that the porosity is less. An additional advantage of a less porous toplayer is a better gloss. Because solvent absorption speed is among others dependent on porosity it is preferred that this more transparent toplayer is rather thin. Because the thickness of the more transparent layer usually does not correspond with the thickness of the toplayer as coated it may be more correct to refer to this layer as top region. Most effect of the transparency of the top region on image density is obtained when the colorants are fixed in the upper layers of the membrane, preventing diffusion of the colorant to lower layers. Fixing can be achieved by incorporating into the membrane mordant functionality. For instance a curable mordant can be added to the curable composition or mordants that are non-curable can be added. Mordants are preferably added in the outer layer or layers e.g. in the top layer and/or in the layer just below the toplayer. Preferably the mordants are cationic making them suitable to form complexes with anionic colorants and may be organic or inorganic. The organic and inorganic mordants may be employed alone independently or in combination with each other. A very suitable method to fix the mordants in the outer layer is to introduce negative charges in the outer layer, for instance by applying anionic curable compounds in the curable composition.

A cationic mordant described above is preferably a polymeric mordant having a primary to tertiary amino group or a quaternary ammonium salt as a cationic group; a cationic non-polymeric mordant may also be employed. Such a polymeric mordant is preferably a homopolymer of a monomer (mordant monomer) having a primary to tertiary amino group or a salt thereof, or a quaternary ammonium salt, as well as a copolymer or a condensation polymer of such a mordant monomer with other monomers (hereinafter referred to as a non-mordant monomers). Such a polymeric mordant may be in the form either of a water-soluble polymer or a water-dispersible latex particle, *e.g.* a dispersion of a polyurethane. Suitable mordant monomers are for example alkyl- or benzyl ammonium salts comprising one or more curable groups such as vinyl, (di)allyl, (meth)acrylate, (meth)acrylamide and (meth)acryloyl groups such as trimethyl-p-vinylbenzylammonium chloride, trimethyl-m-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride; trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylpheuyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate; N,N-dimethylaminoethyl(meth)acrylate, N,N-diethylaminoethyl(meth)acrylate, N,N-dimethylaminopropyl(meth)acrylate, N,N-diethylaminopropyl(meth)acrylate, N, N-dimethylaminoethyl(meth)acrylamide, N,N-diethylaminoethyl(meth)acrylamide, N,N-dimethylaminopropyl(meth)acrylamide, N, N-diethylaminopropyl(meth)acrylamide methyl chloride, ethyl chloride, methyl bromide, ethyl bromide, methyliodide or ethyliodide or ethyl iodide-derived, anatomized substance or sulfonate, alkylsufonate, acetate or alkyl carboxylates thereof formed as a result of the substitution of its anion. Preferred mordant monomers are monomethyldiallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, trimethyl-3-(acryloylamino)propylammonium acetate and the like. Copolymerizable monomers such as N-vinylimidazole and N-vinyl-2-methylimidazole may also be used.

Other suitable mordants are allylamine, diallylamine and derivatives or salts thereof. Suitable salts are for example, hydrochloride, acetate, sulfate and the like. Examples of these compounds include diallylmethylamine and its salt, diallylethylamine and its salt, diallyldimethylammonium salt (wherein the counteranion may e.g. be chloride, acetate ion and sulfate ion) and the like. Any of these allylamine and diallylamine derivatives is usually polymerized in the form of a salt because of its polymerizability in the form of an amine, which is generally too low. It may then be desalted after polymerization if necessary. It is also possible to use N-vinylacetamide or N-vinylformamide units which are subsequently hydrolyzed to yield vinylamine units after polymerization, and salts of such units may also be employed.

A non-mordant monomer as described above is a monomer which does not contain a basic or cationic moiety such as a primary to tertiary amino group or its salt, or quaternary ammonium salt and which exhibits no or substantially slight interaction with a dye contained in the ink jet printing ink. Such a non-mordant monomer may for example be alkyl (meth)acrylates; cycloalkyl (meth)acrylates such as cyclohexyl (meth)acrylate; aryl (meth)acrylates such as phenyl (meth) acrylate; aralkyl esters such as benzyl (meth)acrylate; aromatic vinyls such as styrene, vinyltoluene and alpha - methylstyrene; vinyl esters such as vinyl acetate, vinyl propionate and vinyl versatate; allyl esters such as allyl acetate; halogen-containing monomers such as vinylidene chloride and vinyl chloride; olefins such as ethylene and propylene and the like. Such an alkyl (meth)acrylate is preferably an alkyl (meth)acrylate whose number of the carbon atoms in its alkyl moiety is 1 to 18, such as methyl (meth)acrylate, ethyl (meth)acrylate, propyl (meth)acrylate, isopropyl (meth) acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate, stearyl (meth)acrylate and the like. Among those listed above, methyl acrylate, ethylacrylate, methyl methacrylate, ethyl methacrylate and hydroxyethyl methacrylate are preferred. Any of the non-mordant monomers listed above may be employed alone or in combination with each other.

A preferred polymeric mordant may be polydiallyldimethylammonium chloride, polymethacryloyloxyethyl-beta -hydroxyethyl-dimethylammonium chloride, polyethyleneimide, polyallylamine and its derivative, polyamide-polyamine resin, cationized starch, dicyanediamide formalin condensate, dimethyl-2-hydroxypropylammonium salt polymerization product, polyamidine, polyvinylamine, dicyanediamide-formalin polymeric condensate and other dicyane-based cationic resins, dicyaneamide-diethylenetriamine polymeric condensate and other polyamine-based cationic resins, epichlorohydrin-dimethylamine addition polymerization product, dimethyldiamineammonium chloride-$SO_2$ copolymerization prod- uct, diallylamine salt-$SO_2$ copolymerization product, (meth)acrylate-containing polymer having in its ester moiety a quaternary ammonium salt-substituted alkyl group, styryl polymer having a quaternary ammonium salt-substituted alkyl group and the like. Such a polymeric mordant may typically be those described in US-A-2 484 430, US-A-3 148 061, US-A-3 309 690, US-A-4 115 124, US-A-4 124 386, US-A-4 193 800, US-A-4 273 853, US-A-4 282 305 and US-A-4 450 224.

Preferred organic mordants are polyamine, polyallylamine and its derivatives whose weight mean molecular weight is preferably 100 000 or less. A polyallylamine or its derivative may be any known allylamine polymer and its derivative. Such a derivative may for example be a salt of a polyallylamine with an acid (acid may for example be an inorganic acid such as hydrochloric acid, sulfuric acid, phosphoric acid and nitric acid, an organic acid such as methanesulfonic acid, toluenesulfonic acid, acetic acid, propionic acid, cinnamic acid, (meth)acrylic acid and the like, a combination thereof, or those in which a part of the allylamine is converted into a salt), a derivative of a polyallylamine obtained by a polymeric reaction, a copolymer of a polyallylamine with other copolymerizable monomers (such monomers may for example be (meth)acrylates, styrenes, (meth)acrylamides, acrylonitrile, vinyl esters and the like). Typically, the polyallylamine and its derivative may for example be the compounds described in WO-A-99/21901, WO-A-99/19372 and the like.

It is also possible to employ an inorganic mordant as a mordant, including a polyvalent water-soluble metal salt or a hydrophobic metal salt compound. Typically, the inorganic mordant may for example be a salt or complex of a metal selected from the group consisting of magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten and bismuth. Those exemplified typically are calcium acetate, calcium chloride, calcium formate, calcium sulfate, barium acetate, barium sulfate, barium phosphate, manganese chloride, manganese acetate, manganese formate dihydrate, ammonium manganese sulfate hexahydrate, cupric chloride, copper (II) ammonium chloride dihydrate, copper sulfate, cobalt chloride, cobalt thiocyanate, cobalt sulfate, nickel sulfate hexahydrate, nickel chloride hexahydrate, nickel acetate tetrahydrate, ammonium nickel sulfate hexahydrate, nickel amidosulfate tetrahydrate, aluminium sulfate, aluminium alum, basic polyaluminium hydroxide, aluminium sulfite, aluminium thiosulfate, polyaluminium chloride, aluminium nitrate nonahydrate, aluminium chloride hexahydrate, ferrous bromide, ferrous chloride, ferric chloride, ferrous sulfate, ferric sulfate, zinc phenolsulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconyl acetate, zirconium sulfate, ammonium zirconium carbonate, zirconyl stearate, zirconyl octylate, zirconyl nitrate, zirconium oxychloride, zirconium hydroxychloride, chromium acetate, chromium sulfate, magnesium chloride hexahydrate, magnesium citrate nonahydrate, sodium phosphorus tungstate, tungsten sodium citrate, 12 tungstophosphoric acid n-hydrate, 12 tungstosilicic acid 26-hydrate, molybdenum chloride, 12 molybdophosphoric acid n-hydrate, gallium nitrate, germanium nitrate, strontium nitrate, yttrium acetate, yttrium chloride, yttrium nitrate, indium nitrate, lanthanum benzoate, cerium chloride, cerium sulfate, cerium octylate, praseodymium nitrate, neodymium nitrate, samarium nitrate, europium nitrate, gadolinium nitrate, dysprosium nitrate, erbium nitrate, ytterbium nitrate, hafnium nitrate, bismuth nitrate and the like. An inorganic mordant of the invention is preferably an aluminium-containing compound, titanium-containing compound, zirconium-containing compound, a compound of a metal in the series of Group IIIB in the periodic table (salt or complex). Certain multivalent metal ions are known to be flocculating agents; well known example are aluminum and iron(III) salts such as poly(aluminum chloride) and the sulfates of both ions. These compounds may also be applied as mordants. At high concentrations these compounds may flocculate in the presence of other compounds in aqueous solution but at lower concentrations application as a clear solution is possible.

The amount of mordant is preferably from 0.01 to 5 g/m$^2$, more preferably from 0.1 to 3 g/m$^2$.

If the mordant is a relativity small molecule, the mordant or the mordant-colorant complex may diffuse within the layer or to other layers causing reduced sharpness. This problem is also referred to as long term bleeding. A very good method to prevent diffusion of the mordant molecule is to incorporate negative charges into the polymer matrix of the porous membrane. Preferably curable compounds bearing a negative charge are added to the curable composition. Examples of these negatively charged curable compounds are ethenically unsaturated compounds having sulfonic or carboxylic or phosphoric acid groups, or their metal (or ammonium) salts. Sulfonic acid derivatives are more preferred due to stronger binding with mordants. For example, (meth)acrylic acid-(sulfoalkyl)esters such as sulfopropyl acrylic acid and sulfopropyl methacrylic acid, (meth)acryl-(sulfoalkyl)amides such as 2-Acryloylamido-2-methylpropane-l-sulfonic acid, styrenesulfonic acid, itaconic acid-(alkylsulfonic acid)ester, itaconic acid-bis-(alkylsulfonic acid)ester, maleic acid-(alkylsulfonicacid)ester, maleic acid-bis-(alkylsulfonicacid)ester, alkylsulfonic acid allyl ether, mercapto compounds such as mercaptoalkylsulfonic acid and their metal/ammonium salts.

When applied these negatively charged curable compounds are preferably added up to an amount of 30 wt. %, more preferably in an amount between 0.5 and 10 wt.% based on the weight of the curable compounds in the curable composition, most preferably between 1 and 5 wt.%. Better than by wt.% the introduced negative charges are expressed by equivalents since a monomer molecule may contain more than one negatively charged group and the MW of monomers may very significantly. Preferably the porous membrane of the invention comprises up to 10 milli-equivalents (meq) per m$^2$ with a minimum of 0.1 meq/m$^2$, more preferably between 0.3 and 5 meq/m$^2$, most preferably between 0.5 and 3 meq/m$^2$. The negatively charged compounds may be added to one composition or to the compositions for more than one layer.

Especially preferred are anionic curable compounds that comprise one or more functional thiol groups. These compounds then act as chain transfer agents which are known to be less sensitive to oxygen inhibition and have a remarkable effect on the structure of the membrane: the porosity is less and the surface becomes smoother. Surprisingly the image density increases when chain transfer agents are applied, even in relatively low amounts. An additional advantage of the use of chain transfer agents is that the tackiness of the surface of the membrane after curing becomes less and the structure becomes more rigid. Examples include mercaptoacetic acid, mercaptopropionic acid, alkyl mercaptopropionate, mercapto-propylsulfonate, ethyldithiocarbonato-S-sulfopropylester, dimercaptopropane sulfonate and mercaptobenzimidazole sulfonate.

For adequate colorant fixing properties it is important to have a surplus of positive charges that can bind the negatively charged colorant molecules. Preferably the ratio of negative charges present in the anionic curable compounds and positive charges present in the cationic compounds (*e.g.* mordants) is at least 1:1 and more preferably between 1: 2 and 1: 10.

Cationic mordants may coagulate with the negatively charged curable compounds if added to the curable composition. Therefore it is generally desirable not to add the mordants to the composition but to apply the mordants to the porous membrane after curing. This may be done by impregnation after partial drying or after complete drying. Impregnation can be performed by coating or by spraying a solution of the mordants onto the membrane or by dipping the membrane into a solution of the mordants. Metering coating such as slide or slot coating is preferred. After drying a porous membrane remains wherein the mordant molecules are trapped at the site where the negative charges are build in into the matrix.

In a preferred embodiment (part of the) cationic mordants are not introduced after curing but are combined with anionic curable compounds in the curable composition. These anionic and cationic compounds form complexes in solution which surprisingly do not precipitate but remain in solution. Those complexes appear to have a better solubility in monomer mixtures that have a limited compatibility with water. This limited compatibility with water makes these monomer mixtures very suitable to initiate phase separation. The single ionic compounds are thought to be more hydrophilic due to their charge than the complexes in which the charges are shielded. Also a combination of both methods (introduction in the curable composition and by impregnation) can be used.

In general, mordants are applied to fix the colorants (dyes) from ink. Since at least three colours are used in a colour printer and there exist many brands of ink usually a combination of mordants is required to fix all colorants. Ideally such a mix of mordants is capable of fixing all existing dyes. Alternatively a medium is developed that is dedicated to certain types of ink by which a higher quality may be realized than with a medium suitable for all types of ink.

Additives of different sorts may be brought into the porous membrane by impregnation. Preferably these additives are water soluble or may be dispersed or added as an emulsion. To maintain the porous character the total quantity of additives added should generally be lower than the total pore volume of the membrane, in other words the pores should not be completely filled with additives. The pH of the impregnation solution preferably is comparable to the pH of the porous membrane or if necessary may be adjusted to obtain a clear solution. The impregnation solution may be applied in a wide range of concentrations depending on the type of additives. A suitable concentration is between 1 and 20 wt.%, between 5 and 15 wt.% is more preferred. The impregnation coating may constitute a single layer but may also be a multilayer. A multilayer is very suitable to direct one or more compounds to a desired region in the membrane. Compounds such as mordants and optical brighteners are preferably present in the top region of the membrane; by impregnating the membrane by a multilayer wherein these compounds are present in the toplayer these compounds will be located near the surface of the membrane. The toplayer of the impregnation solution is preferably an aqueous solution and may comprise mordants, optical brighteners, surfactants, curable monomers, amine synergists, water soluble polymers, transportability improving/ friction reducing agents, UV-absorbers, dye fading prevention agents (radical scavengers, light stabilisers, anti-oxidants), cross-linking agents and conventional additives such as pH regulators, viscosity regulators, biocides, organic solvents. The subsequent second curing fixates the membrane structure through which the final state is obtained.

Also the non-curable water soluble polymer(s) mentioned above can be brought into the porous membrane by impregnation.

Other additives that may be added to one or more of the curable compositions or may be included by impregnation are UV absorbing agents, brightening agents, anti-oxidants, light stabilising agents, radical scavengers, anti-blurring agents, antistatic agents and/or anionic, cationic, non-ionic, and/or amphoteric surfactants.

Suitable optical brighteners are disclosed in *e.g.* RD11125, RD9310, RD8727, RD8407, RD36544 and Ullmann's Encyclopedia of industrial chemistry (Vol. A18 p153-167), and comprise thiophenes, stilbenes, triazines, imidazolones, pyrazolines, triazoles, bis(benzoxazoles), coumarins and acetylenes. Preferred optical brightening agents to be used in the invention are water-soluble and comprise compounds selected from the classes distyrylbenzenes, distyrylbiphenyls, divinylstilbenes, diaminostilbenes, stilbenyl-2H-triazoles, diphenylpyrazolines, benzimidazoles and benzofurans. In a preferred embodiment the optical brightening agents are cationic and are trapped by negative sites present in the matrix. An effective method of applying these agents is by impregnation as described above. The positively charged optical brightening agents are preferentially trapped in the top region of the porous membrane where they have the most effect. Then lower amounts are sufficient compared with anionic agents that tend to diffuse through the complete layer of the membrane (or all layers in case of a multilayer membrane). Commercially available examples of suitable cationic optical brightening agents are Blankophor™ ACR (Bayer) and Leucophor™ FTS (Clariant).

Whiteness is suitably expressed by the b-value of the CIELAB color model. CIE L*a*b (CIELAB) is a color model used conventionally to describe all the colors visible to the human eye. It was developed for this specific purpose by the International Commission on Illumination (*Commission Internationale d'Eclairage,* hence the *CIE* acronym in its name). The three parameters in the model represent the luminance of the color (**L**, the smallest L represents black), its position between red and green (**a**, the smallest a represents green) and its position between yellow and blue (**b**, the smallest b represents blue). For very white membranes low b-values are preferred, values between -5 and -8 indicate a very bright white appearance. Relatively high values (-4 and higher) indicate a more yellowish colour and are not preferred. Membranes with lower values (-8 and lower) tend to be bluish and are generally less preferred. The amount of optical brightening agent is preferably lower than 1 g/m$^2$; more preferably between 0.004 and 0.2 g/m$^2$; most preferably between 0.01 and 0.1 g/m$^2$.

Further the porous membrane may comprise one of more light stabilising agents such as sterically hindered phenols, sterically hindered amines, and compounds as disclosed in GB2088777, RD 30805, RD 30362 and RD 31980. Especially suitable are water-soluble substituted piperidinium compounds as disclosed in WO-A-02/55618 and compounds such as CGP-520 (Ciba Specialty Chemicals, Switzerland) and Chisorb 582-L (Double Bond Chemical, Taiwan). Other additives may be one or more plasticizers, such as (poly)alkylene glycol, glycerol ethers and polymer lattices with low Tg-value such as polyethylacrylate, polymethylacrylate and the like and one or more conventional additives, such as described for example in EP-A-1 437 229 and EP-A-1 419 984, and in WO-A-2005/032832, WO-A-2005/032834, and WO-A-2006/011800, such as acids, biocides, pH controllers, preservatives, viscosity modifiers c.q. stabilisers, dispersing agents, inhibitors, anti-blurring agents, antifoam agents, anti-curling agents, water resistance-imparting agents and the like in accordance with the objects to be achieved.

The above-mentioned additives (UV absorbers, antioxidants, anti-blurring agents, plasticizers, conventional additives) may be selected from those known in the art and are preferably added in an amount of about 0.01 to 10 g/m$^2$.

Any of the components mentioned above may be employed alone or in combination with each other. They may be added after being solubilized in water, dispersed, polymer-dispersed, emulsified, converted into oil droplets, or may be encapsulated in microcapsules.

The porous membrane of the invention may be produced by the following steps:

- providing at least one mixture of at least one type of chain transfer agent, photo-initiator and at least one type of curable monomer which monomer is soluble in an aqueous solvent and optionally other curable compounds in a solvent;
- applying said mixture(s) to a support;
- curing said mixture(s) by exposure to radiation of a suitable wavelength and intensity, thereby causing phase separation between the crosslinked curable compound(s) and the solvent;
- removing said solvent by drying and/or washing the resulting porous membrane;
- optionally separating the porous membrane from said support.

When high intensity UV light is applied for cross-linking the curable composition heat is generated by the UV lamp(s). In many systems cooling by air is applied to prevent the lamps from becoming overheated. Still a significant dose of IR light is irradiated together with the UV-beam. In one embodiment the heating-up of the coated support is reduced by placing an IR reflecting quartz plate in between the UV lamp(s) and the coated layer that is guided underneath the lamp(s).

With this technique coating speeds of up to 200 m/min (3.33 m/s) or even higher, such as 300 m/min (5 m/s) or more, can be reached. To reach the desired dose, more than one UV lamp in sequence may be required, so that the coated layer is successively exposed to more than one lamp. When two or more lamps are applied, all lamps may give an equal dose or each lamp may have an individual setting. For instance the first lamp may give a higher dose than the second and following lamps or the exposure intensity of the first lamp may be lower. Surprisingly at constant dose the relative intensities appeared to have subtle effects on the photopolymerisation reaction which influences the porosity and the structure. By varying the exposure conditions a person skilled in the art can determine optimum settings for the process depending on the properties one wishes to achieve.

The invention can be carried out as a batch process, with a stationary support surface, while obtaining full advantage. However, it is much preferred to practice the invention on a continuous basis using a moving support surface such as a roll-driven continuous web or belt. Using such apparatus, the curable composition can be made on a continuous basis or it can be made on a large batch basis, and the composition poured or otherwise applied continuously onto the upstream end of the driven continuous belt support surface, the irradiation source being located above the belt downstream of the composition application station and the membrane removal station being further downstream of the belt, the membrane being removed in the form of a continuous sheet thereof. Removal of the solvent from the membrane can be accomplished either before or after the membrane is taken from the belt. For this embodiment and all others where it is desired to remove the porous membrane from the support surface, it is, of course, preferable that the support surface be such as to facilitate as much as possible the removal of the membrane therefrom. Typical of the support surfaces useful for the practice of such embodiments are smooth, stainless steel sheet or, better yet, Teflon or Teflon-coated metal sheet. Rather than using a continuous belt, the support surface can be of an expendable material, such as release paper or the like (but not soluble in the solvent), in the form of a roll thereof such that it can be continuously unrolled from the roll, upstream of the solution application station, as a continuous driven length and then re-rolled, with the porous membrane thereon, downstream of the radiation station.

It is also within the purview of the invention to form the thin layer of solution as a coating on or intermingled with and supported by a porous sheet or fibrous web to which the resulting membrane remains bounded and which can function, for example, as a strengthening reinforcement or backing for the porous membrane. Such porous support surface of which the porous membrane is formed should, of course, be of a material which is insoluble in the solvent used. Typical of the porous support surfaces which can be used for the practice of such embodiments are paper, woven and nonwoven fabric, and the like.

Embodiments are also recognized in which the porous material is not to be separated from a solid support, but in which the two bonded together are the desired final product. Examples of such embodiments are polyester film supported porous membranes which are utilized in electrophoretic separations, membranes attached to a transparent or opaque sheet to be used as recording media for images and the like.

As the support, any of a transparent support composed of a transparent material such as a plastic, and an opaque support composed of an opaque material such as a paper can be used. For most membrane applications the support - if present - must be porous to allow the passing of fluids or gasses. These porous supports can be paper, woven and nonwoven fabric. Examples of nonwoven fabric are materials based on cellulose, polyamide, polyester, polypropylene and the like.

As a material which can be used in the transparent support for recording media, materials which are transparent and have the nature of enduring the radiated heat upon use in Overhead Projection (OHP) and back light display are preferred. Examples of these materials include polyesters such as polyethylene terephthalate (PET), polyethylene naphthalate (PEN), triacetate cellulose (TAC), polysulfone, polyphenylene oxide, polyethylene, polypropylene, polyvinylchloride, polyimide, polycarbonate, polyamide and the like. Other materials that may be used as support are glass, polyacrylate and the like. Inter alia, polyesters are preferable, and polyethylene terephthalate is particularly preferable.

The thickness of the transparent support is not particularly limited, however 50 to 200 $\mu$m is preferable from the viewpoint of the final products handling properties.

As an opaque support having high gloss, a support with the surface on which a colorant receiving layer is provided, having a gloss of at least 5% - preferably 15% or larger - is preferable. The gloss is a value that can for instance be obtained by measuring the specular surface gloss of the support at 75° (TAPPI T480).

Embodiments include paper supports having high gloss such as resin coated (RC) paper, baryta paper which are used in art paper, coated paper, cast coated paper, supports as used for silver salt photographic paper and the like; films having high gloss by making opaque plastic films such as polyesters, such as polyethylene terephthalate (PET), cellulose esters such as nitrocellulose, cellulose acetate, cellulose acetate butyrate, polysulfone, polyphenylene oxide, polyimide, polycarbonate, polyamide and the like (which may have the surface subjected to calender treatment), by containing of a white pigment or the like; or supports in which a covering layer of polyolefin containing or not containing a white pigment is provided on the surface of the aforementioned various paper supports, the aforementioned transparent support or films containing a white pigment or the like. An example of a suitable embodiment includes a white pigment-containing expanded polyester film (e.g. expanded PET which contains polyolefin fine particles and in which a void is formed by stretching).

The thickness of the opaque support is not particularly limited, however 50 to 300 $\mu$m is preferable from the viewpoint of the final product's handling properties.

As already mentioned an important characteristic of a recording medium is the gloss. The gloss is preferably larger than 20% at 20°, more preferably larger than 30% as measured by a Dr. Lange Refo 3-D reflectometer. It has been found that the gloss of the medium can be improved by selecting the appropriate surface roughness of the used support. It was found, that providing a support having a surface roughness characterised by the value Ra being less than 1.0 $\mu$m, preferably below 0.8 $\mu$m a very glossy medium can be obtained. A low value of the Ra indicates a smooth surface. The Ra is measured according to DIN 4776 using a UBM equipment, software package version 1.62, with the following settings:

(1) Point density 500 P/mm, (2) Area 5.6 x 4.0 mm$^2$, (3) Cut-off wavelength 0.80 mm, (4) Speed 0.5 mm/sec.

In case paper is used as the support for the present invention the paper is selected from materials conventionally used in high quality printing paper. Generally it is based on natural wood pulp and if desired, a filler such as talc, calcium carbonate, $TiO_2$, $BaSO_4$, and the like can be added. Generally the paper also contains internal sizing agents, such as alkyl ketene dimer, higher fatty acids, paraffin wax, alkenylsuccinic acid, such as kymene, epichlorhydrin fatty acid amid and the like. Further the paper may contain wet and dry strength agents such as a polyamine, a poly-amide, polyacrylamide, poly-epichlorohydrin or starch and the like. Further additives in the paper can be fixing agents, such as aluminium sulphate, starch, cationic polymers and the like. The Ra value for a normal grade base paper is usually below 2.0 $\mu$m and may typically have values between 1.0 and 1.5 $\mu$m. The porous layer of the present invention or layers of which at least one comprises the porous layer of this invention can be directly applied to this base paper.

In order to obtain a base paper with a Ra value below 1.0 $\mu$m such a normal grade base paper can be coated with a pigment. Any pigment can be used. Examples of pigments are calcium-carbonate, $TiO_2$, $BaSO_4$, clay, such as kaolin, styrene-acrylic copolymer, Mg-Al-silicate, and the like or combinations thereof. The amount being between 0.5 and 35.0 g/m$^2$ more preferably between 2.0 and 25.0 g/m$^2$. The paper can be coated on one side or on both sides. The amount mentioned before is the amount coated on one side. If both sides are coated the total amount preferably is between 4.0 and 50 g/m$^2$. This pigmented coating can be applied as a pigment slurry in water together with suitable binders like styrene-butadiene latex, styrene-acrylate latex, methyl methacrylate-butadiene latex, polyvinyl alcohol, modified starch, polyacrylate latex or combinations thereof, by any technique known in the art, like dip coating, roll coating, blade coating, bar coating, size press or film press. The pigment coated base paper may optionally be calendered. The surface roughness can be influenced by the kind of pigment used and by a combination of pigment and calendering. The base pigment coated paper substrate has preferably a surface roughness between 0.4 and 0.8 $\mu$m. If the surface roughness is further reduced by super calendering to values below 0.4 $\mu$m the thickness and stiffness values will in general become rather low.

The porous layer or layers of which at least one comprises the porous layer of this invention, can be directly applied to the pigment coated base paper.

In another embodiment, the pigment coated base paper having a pigmented top side and a back-side is provided on at least the topside with a polymer resin through high temperature co-extrusion giving a laminated pigment coated base paper. Typically temperatures in this (co-) extrusion method are above 280 °C but below 350 °C. The preferred polymers used are poly olefins, particularly polyethylene. In a preferred embodiment the polymer resin of the top side comprises compounds such as an opacifying white pigment *e.g.* $TiO_2$ (anatase or rutile), ZnO or ZnS, dyes, colored pigments, including blueing agents, *e.g.* ultramarine or cobalt blue, adhesion promoters, optical brighteners, antioxidant and the like to improve the whiteness of the laminated pigment coated base paper. By using other than white pigments a variety of colors of the laminated pigment coated base paper can be obtained. The total weight of the laminated pigment coated base paper is preferably between 80 and 350 $g/m^2$. The laminated pigment coated base paper shows a very good smoothness, which after applying the porous layer or layers comprising the porous layer or layers of the present invention results in a recording medium with excellent gloss.

On the other hand, depending on the product one wants to make a polyethylene-coated paper can be used with a matt surface or silky surface such as is well known in the art. Such a surface is obtained by conducting an embossing treatment upon extruding a polyethylene on a paper substrate.

As is evident from the description given above, the recording media comprising the porous layer of this invention can be a single layer or a multilayer applied onto a support. It can also comprise layers, which are non porous and are located below the porous layer.

The media including the inventive porous layer or layers, can be coated in one single step or in successive steps as long as the preferred pore sizes, and porosity is obtained.

As a coating method, any method can be used. For example, curtain coating, extrusion coating, air-knife coating, slide coating, roll coating method, reverse roll coating, dip coating, rod bar coating. This coating can be done simultaneously or consecutively, depending on the embodiments used. In order to produce a sufficiently flowable composition for use in a high speed coating machine, it is preferred that the viscosity should not exceed 4,000 mPas at 25 °C, more preferably that it should not exceed 1,000 mPas at 25 °C.

Before applying the coating to the surface of the support material described above this support may be subjected to a corona discharge treatment, glow discharge treatment, flame treatment, ultraviolet light irradiation treatment and the like, for the purpose of improving the wettability and the adhesiveness.

If desired, *e.g.* for improving curling or blocking behaviour or transportability properties in printing machines, one or more coating layers may be applied onto the backside of the support, *i.e.* the side opposite to the side to which the porous membrane is adhered. These backside coating layers may contain polymeric binders and particles or beads and may be composed in such as way that a desired level of smoothness and gloss is obtained. When used as recording media the membranes of the present invention can be used for a multitude of recording applications so it is within the scope of the present invention to provide recording media that are suitable for creating high quality images by using techniques as for example Giclée printing, color copying, screen printing, gravure, dye-sublimation, flexography, ink jet and the like.

Except for application in (inkjet) recording media, the porous membranes find use in variety of other applications, such as in membranes for water treatment, in the chemical and petrochemical industry, for ultra filtration processes in the electrocoating of paint, in the food industry such as in the production process of cheese, clarification of fruit juice and in beer production, in the pharmaceutical industry where a high resistivity membrane for organic solvents is required, and in the biotechnology industry especially where flux reduction due to fouling by protein needs to be avoided. The membrane can be made suitable for nanofiltration or reversed osmosis by selecting appropriate ingredients and process conditions. The hydrophilic character of the porous membrane according to this invention may result in a significant reduction of the fouling rate of the membrane and makes it suitable for all kind of other application where conventional micro- and ultra filtration is applied.

The present invention will be illustrated in more detail by the following non-limiting examples. Unless stated otherwise, all given ratios and amounts are based on weight.

## Examples

A curable composition was prepared according to the specifications in Table 1.

Table 1: stock composition for a porous membrane

| Material | quantity (g) |
|---|---|
| CN-132 | 217.30 |
| CN-435 | 144.75 |
| Isopropanol (IPA) | 86.75 |
| Esacure™ KIP 100F | 2.10 |

(continued)

| Material | quantity (g) |
|---|---|
| Zonyl™ FSN (3 wt.%) | 76.50 |
| Water | up to 900 g |

CN-132 is an acrylate monomer supplied by Cray Valley.
CN-435 is an acrylate monomer supplied by Cray Valley.
Esacure™ KIP 100F is a photo-initiator supplied by Lamberti Spa.
Zonyl™ FSN is a fluoro-surfactant supplied by DuPont.
Isopropanol (IPA) is supplied by Shell.

Compounds were added to 18 gram of this stock composition as indicated in table 2 and water was added up to a quantity of 20 gram.

The curable compositions were coated as a single layer using a bar coater on a substrate (cellulose triacetate film) resulting in a layer with a wet thickness of about 40 μm. The coated sheet was placed in a box covered with a transparent UV translucent polypropylene foil to protect the coated sheet from the cooling air flow from the lamp. The coated sheet was fed underneath a UV-light emitting lamp (Light Hammer™ 6 fitted in a bench-top conveyer LC6E, both supplied by Fusion UV) at a speed of 24 m/min (0.4 m/s) at a power level of 40%. The time between coating and curing was kept within 30 sec. After curing the coated sheet was dried at 60 °C for 20 minutes.

Evaluation

The samples were printed by using a HP325 printer (with the settings paper: HP photo Paper and print quality: best) and black density was measured 3-4 hours after printing by a X-Rite™ DTP41 spectrophotometer.

Results

All compounds are tested in various concentrations. At low concentration for some compounds the effect is negligible while for others a significant effect on black density can be seen at very low (molar) concentration. The effects are clearly dependent on the system that is used as can be concluded from the data in table 4 in comparison with those in table 2 but also are strongly influenced by the process conditions. For good results optimization of the process is necessary however not easy and requires careful tuning of all parameters.

Table 2: Effect of additives on optical (black) density

| | | additive | quantity (g) | quantity (mmol) | Black density |
|---|---|---|---|---|---|
| 1 ref | | none | 0 | 0 | 0.99 |
| 2 ref | | dimethylsulfoxide (10% solution) | 0.23 | 0.3 | 0.94 |
| 3 ref | | dimethylsulfoxide (10% solution) | 0.44 | 0.56 | 0.97 |
| 4 ref | | dimethylsulfoxide (10% solution) | 0.70 | 0.9 | 0.99 |
| 5 | | 3-mercaptopropane sulfonic acid, sodium salt | 0.053 | 0.3 | 0.93 |
| 6 | | 3-mercaptopropane sulfonic acid, sodium salt | 0.1 | 0.56 | 1.06 |
| 7 | | 3-mercaptopropane sulfonic acid, sodium salt | 0.16 | 0.9 | 1.09 |
| 8 | | 2-mercaptoethanol (10% solution) | 0.23 | 0.3 | 0.94 |
| 9 | | 2-mercaptoethanol (10% solution) | 0.44 | 0.56 | 0.96 |
| 10 | | 2-mercaptoethanol (10% solution) | 0.70 | 0.9 | 1.07 |
| 11 | | 2-mercaptoethylether (10% solution) | 0.41 | 0.3 | 1.48 |

(continued)

| | additive | quantity (g) | quantity (mmol) | Black density |
|---|---|---|---|---|
| 12 | 2-mercaptoethylether (10% solution) | 0.77 | 0.56 | 1.23 |
| 13 | 2-mercaptoethylether (10% solution) | 1.24 | 0.9 | 1.31 |
| 14 | 1-butanethiol | 0.03 | 0.3 | 1.03 |
| 15 | 1-butanethiol | 0.05 | 0.56 | 1.10 |
| 16 | 1-butanethiol | 0.08 | 0.9 | 1.47 |
| 17 | 2-mercaptobenzimidazole | 0.05 | 0.3 | 1.28 |
| 18 | 2-mercaptobenzimidazole | 0.08 | 0.56 | 1.40 |
| 19 | 2-mercaptobenzimidazole | 0.14 | 0.9 | 1.41 |
| 20 | 2-mercapto-5-benzimidazole sulfonic acid, sodium salt dihydrate | 0.09 | 0.3 | 1.37 |
| 21 | 2-mercapto-5-benzimidazole sulfonic acid, sodium salt dihydrate | 0.16 | 0.56 | 1.67 |
| 22 | 2-mercapto-5-benzimidazole sulfonic acid, sodium salt dihydrate | 0.26 | 0.9 | 1.71 |
| 23 | ethyldithioacetate * | 0.04 | 0.3 | - |
| 24 | ethyldithioacetate * | 0.04 | 0.3 | 1.44 |
| 25 | o-ethyldithiocarbonato-S-(3-sulfopropyl) ester | 0.08 | 0.3 | 1.05 |
| 26 | o-ethyldithiocarbonato-S-(3-sulfopropyl) ester | 0.16 | 0.56 | 1.37 |
| 27 | o-ethyldithiocarbonato-S-(3-sulfopropyl) ester | 0.25 | 0.9 | 1.85 |
| 28 | diethylsulfide | 0.03 | 0.3 | 1.04 |
| 29 | diethylsulfide | 0.05 | 0.56 | 1.14 |
| 30 | diethylsulfide | 0.08 | 0.9 | 1.13 |
| 31 | dimethylsulfide | 0.03 | 0.3 | 0.95 |
| 32 | dimethylsulfide | 0.05 | 0.56 | 1.07 |
| 33 | dimethylsulfide | 0.08 | 0.9 | 1.51 |
| 34 | N,N-dimethylaniline | 0.04 | 0.3 | 1.19 |
| 35 | N,N-dimethylaniline | 0.07 | 0.56 | 1.56 |
| 36 | N,N-dimethylaniline | 0.11 | 0.9 | 1.44 |
| 37 | triethylamine | 0.03 | 0.3 | 1.11 |
| 38 | triethylamine | 0.06 | 0.56 | 1.17 |
| 39 | triethylamine | 0.09 | 0.9 | 1.24 |
| 40 | tetrabromomethane | 0.10 | 0.3 | 1.43 |
| 41 | tetrabromomethane | 0.19 | 0.56 | 1.40 |
| 42 | tetrabromomethane | 0.30 | 0.9 | 1.31 |
| 43 | 2,3-dimercaptopropane sulfonic acid, sodium salt | 0.07 | 0.3 | 1.15 |
| 44 | 2,3-dimercaptopropane sulfonic acid, sodium salt | 0.13 | 0.56 | 1.73 |
| 45 | 2,3-dimercaptopropane sulfonic acid, sodium salt | 0.21 | 0.9 | 1.77 |
| 46 | 3,6-dioxa-1,8-octaandithiol | 0.05 | 0.3 | 1.23 |
| 47 | 3,6-dioxa-1,8-octaandithiol | 0.10 | 0.56 | 1.40 |

(continued)

| | additive | quantity (g) | quantity (mmol) | Black density |
|---|---|---|---|---|
| 48 | 3,6-dioxa-1,8-octaandithiol | 0.16 | 0.9 | 1.36 |

\* For ethyldithioacetate at the regular coating speed the UV dose appeared to be too low: curing was incomplete and did not yield a solid membrane after drying. By decreasing the coating speed by a factor 2.4 the UV dose increased sufficiently to give a good membrane.

When a compound without significant chain transfer property such as DMSO is present the optical black density does not improve compared with the reference having no additive. Most inventive compounds being chain transfer agents do show an improvement. For some the improvement is much more than for others; the reason for this may be found in the fact that for all compounds (except one) the same process conditions were applied to make a direct comparison. As stated above for each composition fine tuning of the process parameters is needed. The main purpose of these experiments is to show the beneficial effect of the inventive compounds on the black density. By other measures such as the addition of mordants the black density can be increased even further. For two compounds, the sodium salt of 2-mercaptopropane sulfonic acid and 2-mercaptoethanol, no significant improvements were observed. To investigate why these compounds which have chain transfer properties and are therefore expected to show positive effects both compounds were tested at pilot plant scale in a 2-layer lay-out. The compounds were added to the composition for the toplayer only.

Table 3: composition for a 2-layer membrane

| Ingredient | bottom layer (g) | toplayer (g) |
|---|---|---|
| CN-132 | 22.07 | 20.65 |
| CN-435 | 14.48 | 14.48 |
| isopropanol (IPA) | 9.00 | 9.85 |
| KIP100F (20% solution in IPA) | 0.96 | |
| Irgacure™ 2959 | | 0.29 |
| Orgasol™ 10 solution | | 1.56 |
| Zonyl™ FSN (3 wt.%) | | 7.31 |
| Water | 53.50 | 46.89 |

Orgasol 10 solution is a mixture containing Orgasol™ 10 (10 gram), CN-132 (608.55 gram), IPA (227.62 gram); Orgasol™ 10 is supplied by Arkema.
Irgacure™ 2959 is a photo-initiator supplied by Ciba Specialty Chemicals.
To the toplayer, the following compounds were added on equimolar basis (8.5 mmol/100 gram composition).

Table 4: effect of additives on optical black density

| | additive | supplier | gram | optical black density |
|---|---|---|---|---|
| A ref | none | - | - | 1.58 |
| B ref | (3-Sulfopropyl)-acrylate, potassium salt | Raschig | 1.97 | 1.36 |
| C ref | Hydroxyethylmethacrylate | Sigma Aldrich | 1.09 | 1.67 |
| D | 3-Mercaptopropane sulfonic acid, sodium salt | Raschig | 1.51 | 1.85 |
| E | 2-Mercaptoethanol | Sigma Aldrich | 0.65 | 1.92 |

Both layers were coated simultaneously on a substrate (cellulose triacetate film) with a slide bead coater with the following conditions and subsequently cured by UV irradiation:

flow for the bottom layer = 37.5 cc/m$^2$; (cc is $10^{-6}$ m$^3$)
flow for the toplayer = 22.5 cc/m$^2$
coating speed 30 m/min (0.5 m/s)
UV lamp (model Light Hammer™, H-bulb, Fusion UV Systems), power level 80%.
coating/curing conditions: 25 °C, 5 % RH
Drying at 40°C, 8% RH for 2 minutes

Although one reference additive showed an improvement while the other reference showed a decrease in optimal black density this experiment clearly proves the added value of a chain transfer agent: very high density values are obtained. This experiment also makes clear that the process lay-out is very important. In the previous series of tests in a single layer system both chain transfer agents did not show such a remarkable improvement while in the latter test a good result is obtained. The reason for this huge difference is not clear to the researchers and is subject of further investigation.

## Claims

1. Porous membrane comprising the reaction product of a mixture comprising one or more chain transfer agent and at least one type of curable compound and photo-initiator, which curable compound is soluble in an aqueous solvent.

2. Porous membrane according to claim 1 having a porosity of between 10 and 70 percent.

3. Porous membrane according to any one of the previous claims wherein water is miscible with the compound at 25°C in a weight ratio of between 2/98 and 55/45.

4. Porous membrane according to any one of the previous claims wherein the mixture comprises a surfactant.

5. Porous membrane according to any one of the previous claims wherein the chain transfer agent is an anionic compound comprising one or more functional thiol groups.

6. Porous membrane according to any one of the previous claims wherein chain transfer agent is selected from mercaptoacetic acid, mercaptopropionic acid, alkyl mercaptopropionate, mercapto-propylsulfonate, ethyldithiocarbonato-S-sulfopropylester, dimercaptopropane sulfonate and mercaptobenzimidazole sulfonate.

7. Porous membrane according to any one of the previous claims wherein the concentration of the curable compound or compounds in the solvent is between 10 and 80wt%.

8. Porous membrane according to any one of the previous claims having a surplus of positive charges that can bind negatively charged colorant molecules.

9. Porous membrane according to any one of the previous claims wherein said chain transfer agent is present in an amount between 0.001 and 1.0 mmol/g curable compound or curable compounds.

10. Porous membrane according to any one of the previous claims wherein the solvent is an aqueous solvent comprising at least 30wt.% water.

11. Porous membrane according to any one of the previous claims wherein said curable compound is a (meth)acrylate.

12. Porous membrane according to any one of the previous claims wherein the solvent comprises at least 60wt.% water.

13. Membrane according to any one of the previous claims wherein said chain transfer agent is selected from 3-mercaptopropane sulfonic acid, 2-mercaptoethanol, 1-butanethiol, 2-mercaptobenzimidazole, 2-mercapto-5-benzimidazole sulfonic acid, ethyldithioacetate, o-ethyldithiocarbonato-S-(3-sulfopropyl) ester, diethylsulfide, dimethylsulfide, N,N-dimethylaniline, triethylamine, tetrabromomethane, 2,3-dimercaptopropane sulfonic acid and 3,6-dioxa-1,8-octanedithiol.

14. Process for producing a porous membrane comprising the following steps:

• providing at least one mixture according to any one of claims 1 to 13;
• applying said mixture to a support;
• curing said mixture by exposure to radiation of a suitable wavelength and intensity, thereby causing phase separation between the crosslinked curable compound(s) and the solvent;
• removing said solvent by drying and/or washing the resulting porous membrane;
• optionally separating the porous membrane from said support.

15. Process according to claim 14 which is performed on a continuous basis using a moving support surface.

**Patentansprüche**

1. Poröse Membran, umfassend das Reaktionsprodukt einer Mischung, die ein oder mehrere Kettenübertragungsmittel und mindestens eine Art von härtbarer Verbindung und Photoinitiator umfaßt, wobei die härtbare Verbindung in einem wäßrigen Lösungsmittel löslich ist.

2. Poröse Membran nach Anspruch 1 mit einer Porosität zwischen 10 und 70 Prozent.

3. Poröse Membran nach einem der vorhergehenden Ansprüche, wobei Wasser mit der Verbindung bei 25°C in einem Gewichtsverhältnis zwischen 2/98 und 55/45 mischbar ist.

4. Poröse Membran nach einem der vorhergehenden Ansprüche, wobei die Mischung ein Tensid umfaßt.

5. Poröse Membran nach einem der vorhergehenden Ansprüche, wobei es sich bei dem Kettenübertragungsmittel um eine anionische Verbindung mit einer oder mehreren funktionellen Thiolgruppen handelt.

6. Poröse Membran nach einem der vorhergehenden Ansprüche, wobei das Kettenübertragungsmittel unter Mercaptoessigsäure, Mercaptopropionsäure, Alkylmercaptopropionat, Mercaptopropylsulfonat, Ethyldithiocarbonato-S-sulfopropylester, Dimercaptopropansulfonat und Mercaptobenzimidazolsulfonat ausgewählt ist.

7. Poröse Membran nach einem der vorhergehenden Ansprüche, wobei die Konzentration der härtbaren Verbindung bzw. härtbaren Verbindungen in dem Lösungsmittel zwischen 10 und 80 Gew.-% liegt.

8. Poröse Membran nach einem der vorhergehenden Ansprüche mit einem Überschuß an positiven Ladungen, die negativ geladene Farbmittelmoleküle binden können.

9. Poröse Membran nach einem der vorhergehenden Ansprüche, wobei das Kettenübertragungsmittel in einer Menge zwischen 0,001 und 1,0 mmol/g härtbare Verbindung bzw. härtbare Verbindungen vorliegt.

10. Poröse Membran nach einem der vorhergehenden Ansprüche, wobei es sich bei dem Lösungsmittel um ein wäßriges Lösungsmittel mit mindestens 30 Gew.-% Wasser handelt.

11. Poröse Membran nach einem der vorhergehenden Ansprüche, wobei es sich bei der härtbaren Verbindung um ein (Meth)acrylat handelt.

12. Poröse Membran nach einem der vorhergehenden Ansprüche, wobei das Lösungsmittel mindestens 60 Gew.-% Wasser umfaßt.

13. Membran nach einem der vorhergehenden Ansprüche, wobei das Kettenübertragungsmittel unter 3-Mercaptopropansulfonsäure, 2-Mercaptoethanol, 1-Butanthiol, 2-Mercaptobenzimidazol, 2-Mercapto-5-benzimidazolsulfonsäure, Ethyldithioacetat, O-Ethyldithiocarbonato-S-(3-sulfopropyl)ester, Diethylsulfid, Dimethylsulfid, N-N-Dimethylanilin, Triethylamin, Tetrabrommethan, 2,3-Dimercaptopropansulfonsäure und 3,6-Dioxa-1,8-octandithiol ausgewählt ist.

14. Verfahren zur Herstellung einer porösen Membran, bei dem man:

• mindestens eine Mischung nach einem der Ansprüche 1 bis 13 bereitstellt;
• die Mischung auf einen Träger aufbringt;

• die Mischung durch Einwirkung von Strahlung geeigneter Wellenlänge und Intensität härtet, wodurch Phasentrennung zwischen der vernetzten härtbaren Verbindung bzw. den vernetzten härtbaren Verbindungen und dem Lösungsmittel bewirkt wird;
• das Lösungsmittel durch Trocknen und/oder Waschen der erhaltenen porösen Membran entfernt;
• gegebenenfalls die poröse Membran von dem Träger trennt.

15. Verfahren nach Anspruch 14, das man unter Verwendung einer sich bewegenden Trägeroberfläche kontinuierlich durchführt.

**Revendications**

1. Membrane poreuse comprenant le produit de réaction d'un mélange comprenant un ou plusieurs agents de transfert de chaîne et au moins un type de composé durcissable et un photo-amorceur, lequel composé durcissable est soluble dans un solvant aqueux.

2. Membrane poreuse selon la revendication 1 ayant une porosité comprise entre 10 et 70 pour cent.

3. Membrane poreuse selon l'une quelconque des revendications précédentes dans laquelle l'eau est miscible avec le composé à 25°C dans un rapport pondéral compris entre 2/98 et 55/45.

4. Membrane poreuse selon l'une quelconque des revendications précédentes dans laquelle le mélange comprend un tensioactif.

5. Membrane poreuse selon l'une quelconque des revendications précédentes dans laquelle l'agent de transfert de chaîne est un composé anionique comprenant un ou plusieurs groupes fonctionnels thiol.

6. Membrane poreuse selon l'une quelconque des revendications précédentes dans laquelle l'agent de transfert de chaîne est choisi parmi l'acide mercaptoacétique, l'acide mercaptopropionique, un mercaptopropionate d'alkyle, le sulfonate de mercaptopropyle, l'ester éthyldithiocarbonato-S-sulfopropylique, le sulfonate de dimercaptopropane et le sulfonate de mercaptobenzimidazole.

7. Membrane poreuse selon l'une quelconque des revendications précédentes dans laquelle la concentration du ou des composés durcissables dans le solvant est comprise entre 10 et 80% en poids.

8. Membrane poreuse selon l'une quelconque des revendications précédentes présentant un surplus de charges positives qui peuvent se lier à des molécules de colorant de charge négative.

9. Membrane poreuse selon l'une quelconque des revendications précédentes dans laquelle ledit agent de transfert de chaîne est présent en quantité comprise entre 0,001 et 1,0 mmol/g de composé durcissable ou de composés durcissables.

10. Membrane poreuse selon l'une quelconque des revendications précédentes dans laquelle le solvant est un solvant aqueux comprenant au moins 30% en poids d'eau.

11. Membrane poreuse selon l'une quelconque des revendications précédentes dans laquelle ledit composé durcissable est un (méth)acrylate.

12. Membrane poreuse selon l'une quelconque des revendications précédentes dans laquelle le solvant comprend au moins 60% en poids d'eau.

13. Membrane selon l'une quelconque des revendications précédentes dans laquelle ledit agent de transfert de chaîne est choisi parmi l'acide 3-mercaptopropane-sulfonique, le 2-mercaptoéthanol, le 1-butanethiol, le 2-mercaptobenzimidazole, l'acide 2-mercapto-5-benzimidazolesulfonique, le dithioacétate d'éthyle, l'ester o-éthyldithiocarbonato-S-(3-sulfopropylique), le sulfure de diéthyle, le sulfure de diméthyle, la N,N-di-méthylaniline, la triéthylamine, le tétrabromométhane, l'acide 2,3-dimercaptopropanesulfonique et le 3,6-di-oxa-1,8-octanedithiol.

14. Procédé de production d'une membrane poreuse comprenant les étapes consistant à :

• se procurer au moins un mélange selon l'une quelconque des revendications 1 à 13;
• appliquer ledit mélange sur un support;
• durcir ledit mélange en l'exposant à un rayonnement de longueur d'onde et d'intensité convenables, afin de provoquer une séparation des phases entre le(s) composé(s) durcissable(s) réticulé(s) et le solvant;
• éliminer ledit solvant en séchant et/ou en lavant la membrane poreuse ainsi obtenue;
• le cas échéant, séparer la membrane poreuse dudit support.

15. Procédé selon la revendication 14 qui est réalisé sur une base continue au moyen d'une surface de support mobile.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1289767 A
- EP 1418058 A
- EP 1477318 A
- EP 0738608 A
- WO 9921723 A
- WO 0191999 A
- GB 2182046 A
- US 6210808 A
- US 6734514 A
- EP 0888903 A
- WO 9832541 A
- WO 2005016655 A
- US 4707265 A
- US 5079272 A
- EP 0803533 A
- EP 0812697 A
- EP 0824959 A
- EP 0889080 A
- EP 1149624 A
- EP 1176030 A
- US 4466931 A
- EP 0216622 A
- EP 0481517 A
- EP 0251511 A
- JP 5177120 A
- US 4942204 A
- GB 1549352 A
- WO 0188025 A
- US 6911510 B
- EP 1524279 A
- US 2003211299 A
- US 4010289 A
- EP 0485240 A
- FR 2843045 A
- JP 53007783 A
- US 5021160 A
- US 3823027 A
- US 4781985 A
- US 5084340 A

- EP 1437229 A
- WO 03054029 A
- WO 2005032837 A
- WO 2005032836 A
- DE 19721238 A
- EP 0576911 A
- US 3017280 A
- US 2983611 A
- US 3100704 A
- DE 2529321 A
- GB 760775 A
- GB 1260772 A
- US 4021245 A
- US 4029504 A
- GB 1055713 A
- US 3591379 A
- US 3754924 A
- US 3767448 A
- JP 49106821 A
- US 4056396 A
- JP 57014835 B
- US 4396706 A
- US 2484430 A
- US 3148061 A
- US 3309690 A
- US 4115124 A
- US 4124386 A
- US 4193800 A
- US 4273853 A
- US 4282305 A
- US 4450224 A
- WO 9921901 A
- WO 9919372 A
- GB 2088777 A
- WO 0255618 A
- EP 1419984 A
- WO 2005032832 A
- WO 2005032834 A
- WO 2006011800 A

**Non-patent literature cited in the description**

- **J. Brandrup ; E. H. Immergut ; E.A. Grulke.** Polymer Handbook. 1999, II-97-II-168
- **P. Flory.** Principles of Polymer Chemistry. Cornell University Press
- **George Odian.** Principles of Polymerization. John Wiley & Sons, 2004

- Development of Ultraviolet and Electron Beam Curable Materials. CMC publishing, 2003
- **V.N. Izmailova et al.** *Colloid Journal,* 2002, vol. 64 (5), 640-642
- **O. Toledano et al.** *Journal of Colloid and Interface Science,* 1998, vol. 200, 235-240

- Ullmann's Encyclopedia of industrial chemistry. vol. A18, 153-167